(19) 

Europäisches Patentamt

European Patent Office

Office européen des brevets

(11) **EP 4 651 598 A1**

(12) **EUROPEAN PATENT APPLICATION**
published in accordance with Art. 153(4) EPC

(43) Date of publication:
**19.11.2025 Bulletin 2025/47**

(21) Application number: 24757096.3

(22) Date of filing: **05.02.2024**

(51) International Patent Classification (IPC):
$H04W\ 72/12$ (2023.01)  $H04W\ 72/04$ (2023.01)
$H04W\ 72/0457$ (2023.01)  $H04W\ 72/232$ (2023.01)
$H04L\ 5/14$ (2006.01)

(52) Cooperative Patent Classification (CPC):
H04L 5/14; H04W 72/04; H04W 72/0457;
H04W 72/12; H04W 72/232

(86) International application number:
**PCT/KR2024/001666**

(87) International publication number:
**WO 2024/172367 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 KR 20230019639**

(71) Applicant: Samsung Electronics Co., Ltd.
**Suwon-si, Gyeonggi-do 16677 (KR)**

(72) Inventors:
• CHOI, Kyungjun
 Suwon-si, Gyeonggi-do 16677 (KR)
• LIM, Seongmok
 Suwon-si, Gyeonggi-do 16677 (KR)
• JANG, Youngrok
 Suwon-si, Gyeonggi-do 16677 (KR)
• JI, Hyoungju
 Suwon-si, Gyeonggi-do 16677 (KR)

(74) Representative: Gulde & Partner
 Patent- und Rechtsanwaltskanzlei mbB
 Berliner Freiheit 2
 10785 Berlin (DE)

(54) **METHOD AND DEVICE FOR TRANSMITTING/RECEIVING DATA CHANNEL FOR FULL-DUPLEX COMMUNICATION IN WIRELESS COMMUNICATION SYSTEM**

(57) The present disclosure relates to a 5G or 6G communication system for supporting higher data transmission rates. The present disclosure provides a method and device for downlink scheduling for low-complexity user equipment in a wireless communication system.

FIG. 16

EP 4 651 598 A1

**Description**

[Technical Field]

The disclosure relates to operation of a user equipment (UE) and a base station in a wireless communication system. Particularly, the disclosure relates to a method of transmitting or receiving a data channel by a UE, and a device therefor.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed

## EP 4 651 598 A1

computing technology for implementing services at levels of complexity exceeding the limit of UE operation capability by utilizing ultra-high-performance communication and computing resources.

With the advance of wireless communication systems as described above, various services can be provided, and accordingly there is a need for ways to smoothly provide these services.

[Disclosure]

[Technical Problem]

Embodiments set forth herein are to provide a device and a method capable of effectively providing services in a mobile communication system.

[Technical Solution]

The disclosure has been made to solve the problem described above, and provides a method performed by a terminal in a communication system, and the method may include an operation of receiving configuration information associated with a bandwidth part (BWP) from a base station, the BWP including a plurality of resource blocks (RBs), an operation of receiving, from the base station, scheduling information indicating a first number of RBs among the plurality of RBs, an operation of identifying a maximum of a second number of RBs scheduled based on the scheduling information, and an operation of receiving a downlink signal in the maximum of second number of RBs from the base station.

In addition, a method performed by a base station in a communication system may include an operation of transmitting configuration information associated with a bandwidth part (BWP) to a terminal, the BWP including a plurality of resource blocks (RBs), an operation of transmitting scheduling information indicating a first number of RBs among the plurality of RBs to the terminal based on a maximum of a second number of RBs to be scheduled, and an operation of transmitting, to the terminal, a downlink signal in the maximum of second number of RBs.

In addition, a terminal in a communication system may include a transceiver, and a controller configured to receive configuration information associated with a bandwidth part (BWP) from a base station, the BWP including a plurality of resource blocks (RBs), to receive, from the base station, scheduling information indicating a first number of RBs among the plurality of RBs, to identify a maximum of a second number of RBs scheduled based on the scheduling information, and to receive, from the base station, a downlink signal in the maximum of second number of RBs.

In addition, in a method performed by a base station in a communication system, the base station may include a transceiver, and a controller configured to transmit configuration information associated with a bandwidth part (BWP) to a terminal, the BWP including a plurality of resource blocks (RBs), to transmit scheduling information indicating a first number of RBs among the plurality of RBs to the terminal based on a maximum of a second number of RBs to be scheduled, and to transmit, to the terminal, a downlink signal in the maximum of the second number of RBs.

[Advantageous Effects]

Embodiments set forth herein provide a device and a method capable of effectively providing services in a mobile communication system.

[Description of Drawings]

FIG. 1 illustrates an example of a basic structure of a time-frequency domain in a 5G communication system.

FIG. 2 illustrates an example of a structure of a frame, a subframe, and a slot in a 5G communication system.

FIG. 3 illustrates an example of a bandwidth part configuration in a 5G communication system.

FIG. 4 illustrates an example of a control resource set used to transmit a downlink control channel in a 5G communication system.

FIG. 5 illustrates an example of a basic unit of time and frequency resources constituting a downlink control channel available in a 5G communication system.

FIG. 6 illustrates an example of frequency domain resource allocation with regard to a PDSCH or PUSCH in a 5G communication system;

FIG. 7 illustrates an example of time domain resource allocation with regard to a PDSCH in a wireless communication system according to an embodiment of the disclosure.

FIG. 8 illustrates an example of time domain resource allocation according to a subcarrier spacing with regard to a data channel and a control channel in a 5G communication system.

FIG. 9 illustrates an example of operating SBFD in a TDD band of a wireless communication system to which the disclosure is applied.

FIG. 10 illustrates examples of a signal reception method of a legacy UE and a signal reception method of a low-complexity UE.

FIG. 11 illustrates an example of selecting an RB according to a first method of an embodiment of the disclosure.

FIG. 12 illustrates an example of selecting an RB according to a second method of an embodiment of the disclosure.

FIG. 13 illustrates examples of a new frequency domain scheduling method according to the disclosure.

FIG. 14 illustrates an example of RB selection before interleaving and RB selection after interleaving, according to an interleaving bandwidth.

FIG. 15 illustrates an example of operation of a UE that performs an embodiment of the disclosure.

FIG. 16 illustrates an example of operation of a base station that performs an embodiment of the disclosure.

FIG. 17 illustrates a structure of a UE in a wireless communication system according to an embodiment of the disclosure.

FIG. 18 illustrates a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. Also, in the following description, the term "A/B" may be understood as meaning "A and/or B".

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a UE transmits data or control signals to a base station, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

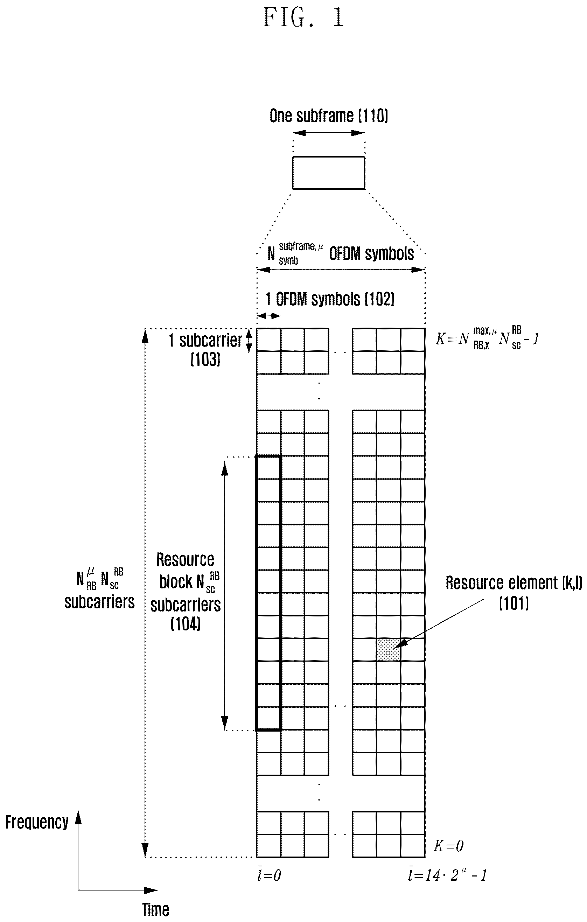

FIG. 1 illustrates an example of a basic structure of a time-frequency domain which is a radio resource domain in a 5G communication system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, OFDM symbols may constitute one subframe 110.

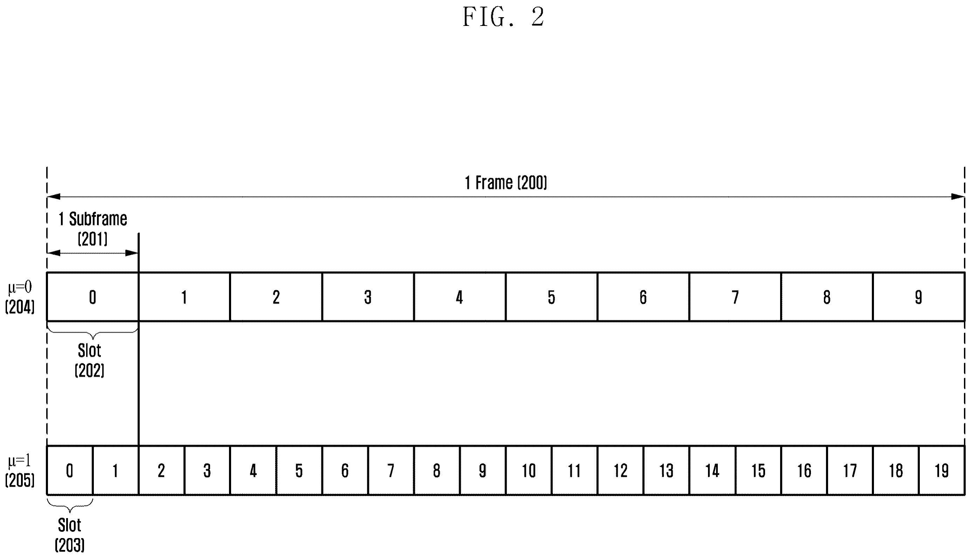

FIG. 2 illustrates an example of a structure of a frame, a subframe, and a slot in a 5G communication system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing (SCS) 204 or 205. The example of FIG. 2 shows the case of μ=0 (204) and the case of μ=1 (205) as a configuration value for the SCS.

In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

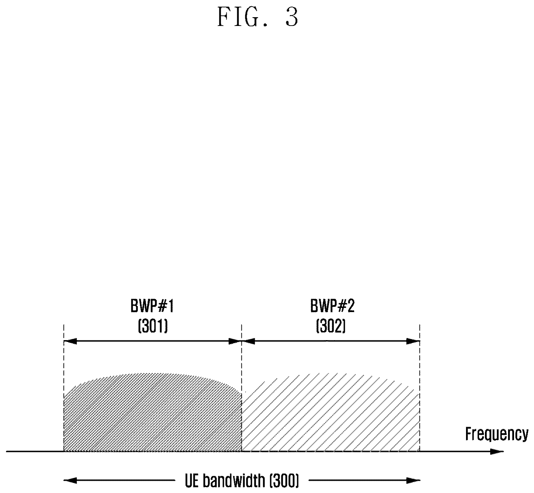

FIG. 3 illustrates an example of a bandwidth part configuration in a 5G communication system.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                          SEQUENCE {

    bwp-Id                       BWP-Id,
    (bandwidth part identifier)

    locationAndBandwidth         INTEGER (1..65536),
    (bandwidth part location)

    subcarrierSpacing            ENUMERATED {n0, n1, n2, n3, n4, n5},
    (subcarrier spacing)

    cyclicPrefix                 ENUMERATED { extended }
    (cyclic prefix)

}
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI). According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0.

The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

The bandwidth part configuration may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support UE's data transmission and reception using both a subcarrier spacing of 15kHz and a subcarrier spacing of 30kHz, the base station may configure two bandwidth parts as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and from this, control resource set (CORESET) #0 (which may correspond to a control resource set having a control resource set index of 0) may be configured for the UE. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, downlink control information (DCI) in a 5G communication system will be described in detail.

In a wireless communication system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 3 below, for example.

[Table 3]

| |
|---|
| - Identifier for DCI formats - [1] bit <br> - Frequency domain resource assignment - <br><br> $[\lceil \log_2(N_{\mathrm{RB}}^{\mathrm{UL,BWP}}(N_{\mathrm{RB}}^{\mathrm{UL,BWP}}+1)/2) \rceil]$ bits |

(continued)

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 4 below, for example.

[Table 4]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

- For resource allocation type 0, $\left\lceil N_{\mathrm{RB}}^{\mathrm{UL,BWP}}/P \right\rceil$ bits

- For resource allocation type 1, $\left\lceil \log_2(N_{\mathrm{RB}}^{\mathrm{UL,BWP}}(N_{\mathrm{RB}}^{\mathrm{UL,BWP}}+1)/2) \right\rceil$ bits

- Time domain resource assignment -1, 2, 3, or 4 bits
- Virtual resource block (VRB)-to-physicalresource block (PRB) mapping - 0 or 1 bit, only for resource allocation type 1.
    ◦ 0 bit if only resource allocation type 0 is configured;
    ◦ 1 bit otherwise.
- Frequency hopping flag - 0 or 1 bit, only for resource allocation type 1.
    ◦ 0 bit if only resource allocation type 0 is configured;
    ◦ 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
    ◦ 1 bit for semi-static HARQ-ACK codebook;
    ◦ 2 bits for dynamic HARQ-ACK codebook with single HARQ-ACK codebook.
- 2nd downlink assignment index - 0 or 2 bits
    ◦ 2 bits for dynamic HARQ-ACK codebook with two HARQ-ACK sub-codebooks;
    ◦ 0 bit otherwise.
- TPC command for scheduled PUSCH - 2 bits

- SRS resource indicator - $\left\lceil \log_2\left( \sum_{k=1}^{L_{\max}} \binom{N_{\mathrm{SRS}}}{k} \right) \right\rceil$ or $\left\lceil \log_2(N_{\mathrm{SRS}}) \right\rceil$ bits

    ◦ $\left\lceil \log_2\left( \sum_{k=1}^{L_{\max}} \binom{N_{\mathrm{SRS}}}{k} \right) \right\rceil$ bits for non-codebook based PUSCH transmission;

    ◦ $\left\lceil \log_2(N_{\mathrm{SRS}}) \right\rceil$ bits for codebook based PUSCH transmission.

- Precoding information and number of layers - up to 6 bits

(continued)

> - Antenna ports - up to 5 bits
> - SRS request - 2 bits
> - Channel state information (CSI) request - 0, 1, 2, 3, 4, 5, or 6 bits
> - Code block group (CBG) transmission information - 0, 2, 4, 6, or 8 bits
> - Phase tracking reference signal (PTRS)-demodulation reference signal (DDMRS) association - 0 or 2 bits.
> - beta_offset indicator - 0 or 2 bits
> - DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 5 below, for example.

[Table 5]

> - Identifier for DCI formats - [1] bit
> - Frequency domain resource assignment - $\left[\left\lceil \log_2 (N_{\mathrm{RB}}^{\mathrm{DL,BWP}}(N_{\mathrm{RB}}^{\mathrm{DL,BWP}}+1)/2) \right\rceil\right]$ bits
> - Time domain resource assignment - X bits
> - VRB-to-PRB mapping - 1 bit.
> - Modulation and coding scheme - 5 bits
> - New data indicator - 1 bit
> - Redundancy version - 2 bits
> - HARQ process number - 4 bits
> - Downlink assignment index - 2 bits
> - TPC command for scheduled PUCCH - [2] bits
> - Physical uplink control channel (PUCCH) resource indicator - 3 bits
> - PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 6 below, for example.

[Table 6]

> - Carrier indicator - 0 or 3 bits
> - Identifier for DCI formats - [1] bits
> - Bandwidth part indicator - 0, 1 or 2 bits
> - Frequency domain resource assignment
>
> > ∘ For resource allocation type 0, $\left\lceil N_{\mathrm{RB}}^{\mathrm{DL,BWP}}/P \right\rceil$ bits
> >
> > ∘ For resource allocation type 1,
> > $\left\lceil \log_2 (N_{\mathrm{RB}}^{\mathrm{DL,BWP}}(N_{\mathrm{RB}}^{\mathrm{DL,BWP}}+1)/2) \right\rceil$ bits bits
>
> - Time domain resource assignment -1, 2, 3, or 4 bits
> - VRB-to-PRB mapping - 0 or 1 bit, only for resource allocation type 1.
>
> > ∘ 0 bit if only resource allocation type 0 is configured;
> > ∘ 1 bit otherwise.
>
> - Physical resource block (PRB) bundling size indicator - 0 or 1 bit
> - Rate matching indicator - 0, 1, or 2 bits
> - Zero power (ZP) channel state information (CSI)-reference signal (RS) trigger - 0, 1, or 2 bits
> For transport block 1:
> - Modulation and coding scheme - 5 bits

(continued)

| |
|---|
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

Hereinafter, a downlink control channel in a 5G communication system will be described in more detail with reference to the accompanying drawings.

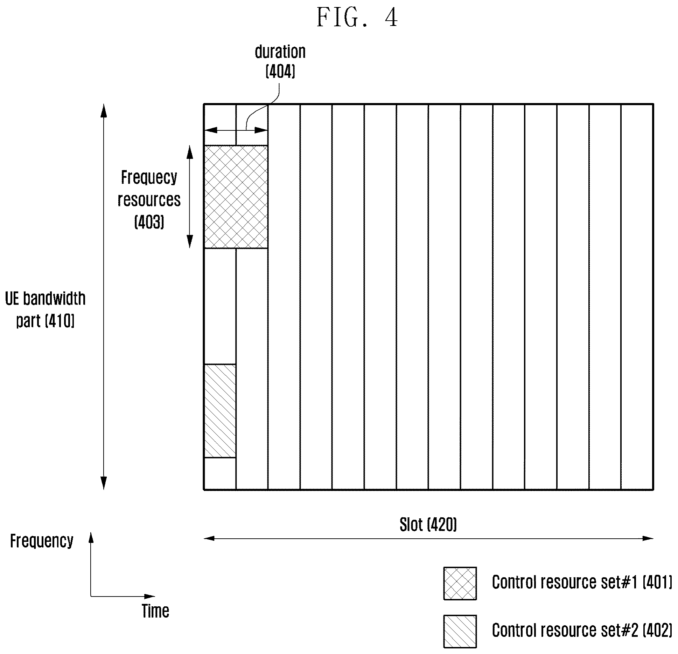

FIG. 4 illustrates an example of a control resource set used to transmit a downlink control channel in a 5G communication system.

FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets 401 and 402 may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through higher layer signaling (for example, system information, MIB, RRC signaling, etc.). The description that a control resource set is configured for a UE means that information such as a control resource set identity, the control resource set's frequency location, and the control resource set's symbol duration is provided. For example, the control resource set may include the following pieces of information: given in Table 7 below.

[Table 7]

```
ControlResourceSet ::=                    SEQUENCE {
-- Corresponds to L1 parameter 'CORESET-ID'


controlResourceSetId          ControlResourceSetId,
    (control resource set identity)
frequencyDomainResources          BIT STRING (SIZE (45)),
    (frequency domain resource assignment information)
duration                      INTEGER (1..maxCoReSetDuration),
    (time domain resource assignment information)
cce-REG-MappingType                    CHOICE {
    (CCE-to-REG mapping type)
    interleaved                   SEQUENCE {

        reg-BundleSize                    ENUMERATED {n2, n3, n6}
,
        (REG bundle size)


        precoderGranularity               ENUMERATED {sameAsRE
G-bundle, allContiguousRBs},


        interleaverSize                   ENUMERATED {n2, n3, n6}


        (interleaver size)
```

| | |
|---|---|
| shiftIndex | INTEGER(0..maxNrofPhysical |
| ResourceBlocks-1) | OPTIONAL |
| (interleaver shift) | |
| }, | |
| nonInterleaved | NULL |
| }, | |
| tci-StatesPDCCH | SEQUENCE(SIZE (1..maxNro |
| fTCI-StatesPDCCH)) OF TCI-StateId | OPTIONAL, |
| (QCL configuration information) | |
| tci-PresentInDCI | ENUMERATED {enabled} |
| | OPTIONAL, … Need S |
| } | |

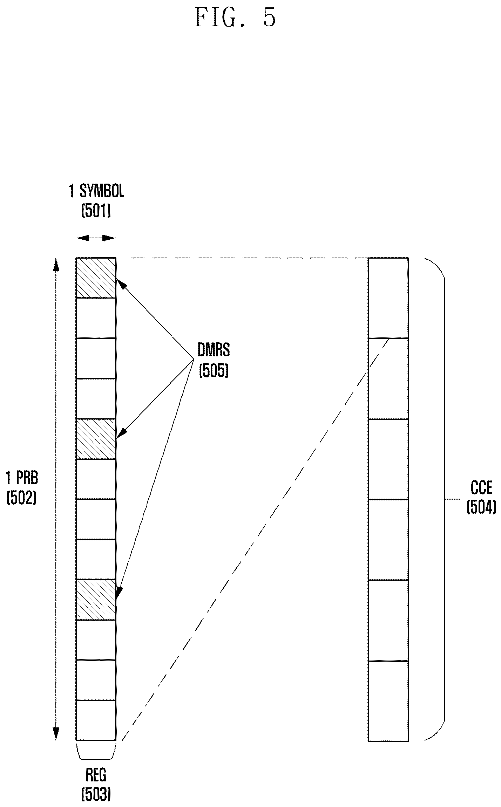

In Table 7, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set. FIG. 5 illustrates an example of a basic unit of time and frequency resources constituting a downlink control channel available in a 5G communication system. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. As in FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

Parameters for a search space regarding a PDCCH may be configured for the UE by the base station through higher layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the control resource set may include the following pieces of information: given in Table 8 below.

[Table 8]

```
SearchSpace ::=                    SEQUENCE {
    -- Identity of the search space. SearchSpaceId = 0 identifies the SearchSpace
configured via PBCH (MIB) or ServingCellConfigCommon.
    searchSpaceId                  SearchSpaceId,
    (search space identity)
    controlResourceSetId           ControlResourceSetId,
    (control resource set identity)
    monitoringSlotPeriodicityAndOffset     CHOICE {
    (monitoring slot level periodicity)
        sl1                        NULL,
        sl2                        INTEGER (0..1),
        sl4                        INTEGER (0..3),
```

```
        sl5                         INTEGER  (0..4),
        sl8                         INTEGER  (0..7),
        sl10                        INTEGER  (0..9),
        sl16                        INTEGER  (0..15),
        sl20                        INTEGER  (0..19)
    }
                OPTIONAL,
duration (monitoring duration)          INTEGER  (2..2559)
monitoringSymbolsWithinSlot              BIT  STRING  (SIZE  (14))
                OPTIONAL,
(monitoring symbols within slot)
    nrofCandidates                  SEQUENCE  {
(number of PDCCH candidates for each aggregation level)
        aggregationLevel1           ENUMERATED  {n0, n1, n2, n3, n4, n5, n6,
n8},
        aggregationLevel2           ENUMERATED  {n0, n1, n2, n3, n4, n5, n6,
n8},
        aggregationLevel4           ENUMERATED  {n0, n1, n2, n3, n4, n5, n6,
n8},
        aggregationLevel8           ENUMERATED  {n0, n1, n2, n3, n4, n5, n6,
n8},
        aggregationLevel16          ENUMERATED  {n0, n1, n2, n3, n4, n5, n6,
n8}
    },

    searchSpaceType                 CHOICE  {
    (search space type)
        -- Configures this search space as common search space (CSS) and DCI formats
to monitor.
        common                          SEQUENCE  {
    (common search space)
        }
        ue-Specific                     SEQUENCE  {
    (UE-specific search space)
        -- Indicates whether the UE monitors in this USS for DCI formats 0-0 and 1-0 or
for formats 0-1 and 1-1.
```

```
        formats                                          ENUMERATED  {formats0-0-And-1

-0,  formats0-1-And-1-1},

    ...

}
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2. According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below
Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS
The DCI formats enumerated above may follow the definitions given in Table 9 below, for example.

[Table 9]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM sym bol(s) where UE may assume no transmission is intended for the UE |

(continued)

| DCI format | Usage |
|---|---|
| 2_2 | Transmission of TPC commands for PUCCH and PUSCH |
| 2_3 | Transmission of a group of TPC commands for SRS trans missions by one or more UEs |

In a 5G system, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n_{s,f}^{\mu}$ : slot index

- $M_{s,max}^{(L)}$ : number of PDCCH candidates at aggregation level L

- $m_{s,n_{CI}} = 0, \ldots, M_{s,max}^{(L)} -1$ : PDCCH candidate index at aggregation level L
- $i = 0, ..., L$ -1

- $Y_{p,n_{s,f}^{\mu}} = \left( A_p \cdot Y_{p,n_{s,f}^{\mu}-1} \right) \bmod D$ , $Y_{p,-1} = n_{RNTI} \neq 0$, $A_p = 39827$ *for pmod3 = 0*, $A_p = 39829$ *for pmod3 = 1*, $A_p = 39839$ *for pmod3 = 2*, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

Multiple search space sets may be configured by different parameters (for example, parameters in Table 8), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

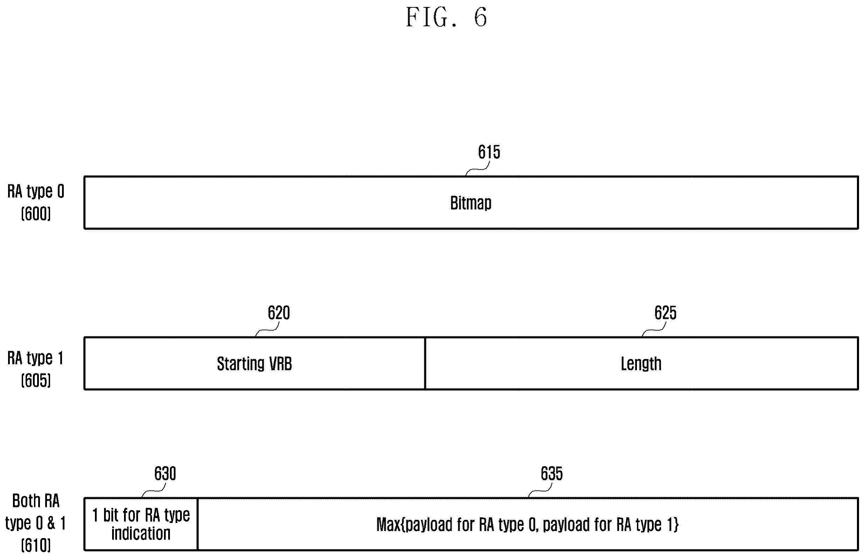

FIG. 6 illustrates an example of frequency domain resource allocation with regard to a PDSCH or PUSCH in a 5G communication system;

FIG. 6 illustrates three frequency domain resource allocation methods of type-0 600, type-1 605, and dynamic switch 610 which can be configured through an higher layer in an NR wireless communication system.

Referring to FIG. 6, in the case in which a UE is configured to use only resource type-0 through higher layer signaling (600), partial downlink control information (DCI) for allocating a PDSCH to the UE include a bitmap including N_RBG bits. As used herein, N_RBG refers to the number of resource block groups (RBGs) determined according to the BWP size allocated by a BWP indicator and higher layer parameter rbg-Size, as in Table 10 below, and data is transmitted in RBGs indicated as "1" by the bitmap.

[Table 10]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |

(continued)

| Bandwidth Part Size | Configuration 1 | Configuration 2 |
|---|---|---|
| 145 - 275 | 16 | 16 |

The BWP size refers to the number of RBs included in the BWP. More specifically, if resource allocation type-0 is indicated, the length of a frequency domain resource assignment (FDRA) field of DCI received by the UE is equal to the number $N_{RBG}$ of RBGs, and is $N_{RBG} = \left\lceil (N_{SWP}^{size} + (N_{BWP}^{start} mod P))/P \right\rceil$ . Here, the first RBG includes $RBG_0^{size} = P - N_{BWP}^{size} mod P$ RBs, and the last RBG include $RBG_{last}^{size} = \left( N_{BWP}^{start} + N_{BWP}^{size} \right) mod P$ RBs if $\left( N_{BWP}^{start} + N_{BWP}^{size} \right) mod P > 0$ and otherwise, includes $RBG_{last}^{size} = P$ RBs. The other RBGs each include P RBs. Here, P refers to the number of nominal RBGs as determined according to Table 10.

If the UE is configured to use only resource allocation type-1 through higher layer signaling (605), DCI for allocating PDSCHs/PUSCHs to the UE may include frequency domain resource allocation (FDRA) information including $\left\lceil log_2(N_{RB}^{BWP}(N_{RB}^{BWP} + 1)/2) \right\rceil$ bits. Here, $N_{RB}^{BWP}$ is the number of RBs included in the BWP. The base station may thereby configure a starting VRB 620 and the length 625 of a frequency domain resource allocated continuously therefrom.

In the case in which the UE is configured to use both resource allocation type-0 and resource allocation type-1 through higher layer signaling (610), partial DCI for allocating a PDSCH to the corresponding UE includes frequency domain resource allocation information including as many bits as the larger value 635 between the payload 615 for configuring resource allocation type-0 and the payload 620 and 625 for configuring resource allocation type-1. One bit may be added to the foremost part (MSB) of the frequency domain resource allocation information inside the DCI, and if the bit has the value of "0", use of resource allocation type-0 may be indicated, and if the bit has the value of "1", use of resource allocation type-1 may be indicated.

Hereinafter, a time domain resource allocation method with regard to a data channel in a 5G system will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 11 or Table 12 below may be transmitted from the base station to the UE.

[Table 11]

```
PDSCH-TimeDomainResourceAllocationList  ::=      SEQUENCE  (SIZE(1..maxNrofDL-
Allocations)) OF PDSCH-TimeDomainResourceAllocation

PDSCH-TimeDomainResourceAllocation ::=      SEQUENCE {

k0   INTEGER(0..32)   OPTIONAL,     -- Need S

(PDCCH-to-PDSCH timing, slot unit)

mappingType          ENUMERATED {typeA, typeB},

(PDSCH mapping type)

startSymbolAndLength          INTEGER (0..127)

(start symbol and length of PDSCH)

}
```

[Table 12]

```
PUSCH-TimeDomainResourceAllocationList  ::=      SEQUENCE  (SIZE(1..maxNrofUL-
Allocations)) OF PUSCH-TimeDomainResourceAllocation

PUSCH-TimeDomainResourceAllocation ::=      SEQUENCE {

k2   INTEGER(0..32)      OPTIONAL,   -- Need S

(PDCCH-to-PUSCH timing, slot unit)

mappingType    ENUMERATED {typeA, typeB},

(PUSCH mapping type)

startSymbolAndLength     INTEGER (0..127)

(start symbol and length of PUSCH)

}
```

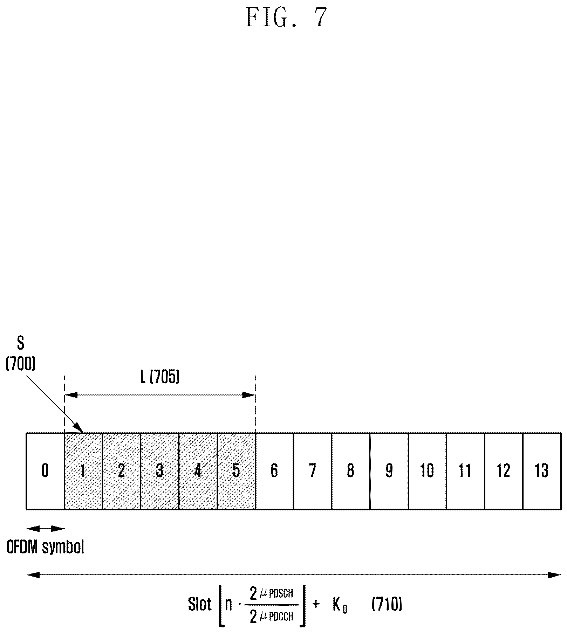

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station. FIG. 7 illustrates an example of time domain resource allocation with regard to a PDSCH in a wireless communication system according to an embodiment of the disclosure.

Referring to FIG. 7, the base station may indicate the time domain location of a PDSCH resource according to the subcarrier spacing (SCS) ($\mu_{PDSCH}$, $\mu_{PDCCH}$) of a data channel and a control channel configured by using an higher layer, the scheduling offset (K0) value, and the OFDM symbol start location 700 and length 705 within one slot dynamically indicated through DCI.

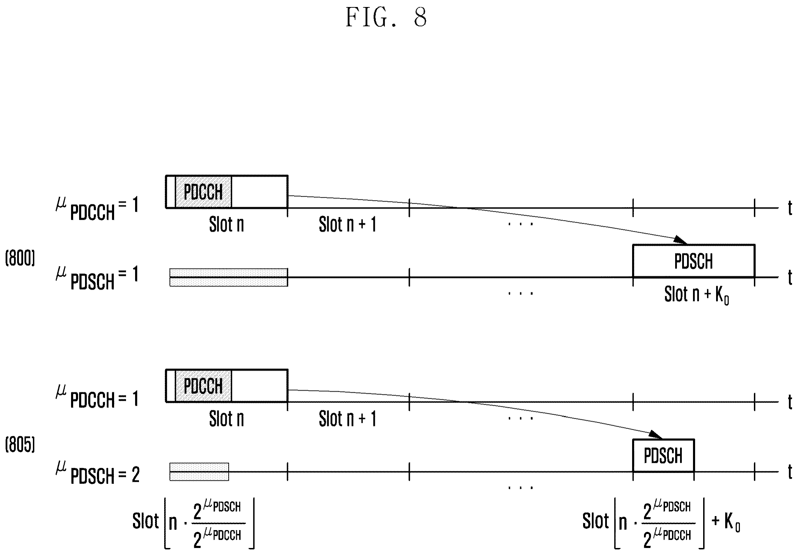

FIG. 8 illustrates an example of time domain resource allocation according to a subcarrier spacing with regard to a data channel and a control channel in a 5G communication system.

Referring to FIG. 8, if the data channel and the control channel have the same subcarrier spacing (800, $\mu_{PDSCH}$ =$\mu_{PDCCH}$), the slot number for data and that for control are identical, and the base station and the UE may accordingly generate a scheduling offset in conformity with a predetermined slot offset K0. On the other hand, if the data channel and the control channel have different subcarrier spacings (805, $\mu_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH.

Hereinafter, embodiments of the disclosure will be described in detail in conjunction with the accompanying drawings. The contents of the disclosure may be applied to FDD and TDD systems.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, the above examples may be described through several embodiments, but they are not independent of each other, and one or more embodiments may be applied simultaneously or in combination.

In 3GPP, subband non-overlapping full duplex (SBFD) is being discussed as a new duplex scheme based on NR. SBFD is a technology of using a part of a downlink resource as an uplink resource in a TDD band (spectrum) of a frequency of 6 GHz or below or a frequency of 6 GHz or above to receive uplink transmission from a UE as much as the amount of increased uplink resources so as to expand the uplink coverage of the UE, and receive feedback relating to downlink transmission from the UE in the increased uplink resources so as to reduce feedback delay. In the disclosure, a UE capable of receiving, from a base station, information on whether SBFD is supported, and performing uplink transmission in a part of a downlink resource may be referred to as an SBFD-capable UE for the sake of convenience. The following schemes may be considered in order to define the SBFD scheme in specifications, and in order for the SBFD-capable UE to determine whether the SBFD is supported in a specific cell (or frequency/frequency band).

A first scheme is as follows. Besides the frame structure type of the existing unpaired spectrum (or time division duplex (TDD)) or paired spectrum (or frequency division duplex (FDD)), a different frame structure type (for example, frame structure type 2) may be introduced to define the above-described SBFD. The frame structure type 2 may be defined as being supported in the specific frequency or frequency band, or a base station may indicate to a UE whether SBFD is supported by using system information. An SBFD-capable UE may receive the system information including whether SBFD is supported, and determine whether SBFD is supported in the specific cell (or frequency or frequency band).

A second scheme is as follows. Without defining a new frame structure type, it may be indicated whether SBFD is additionally supported at a specific frequency or frequency band of the existing unpaired spectrum (or TDD). The second scheme may define whether SBFD is additionally supported in the specific frequency or frequency band of the conventional unpaired spectrum, or a base station may indicate to a UE whether SBFD is supported by using system information. An SBFD-capable UE may receive the system information including whether SBFD is supported, and determine whether SBFD is supported in the specific cell (or frequency or frequency band).

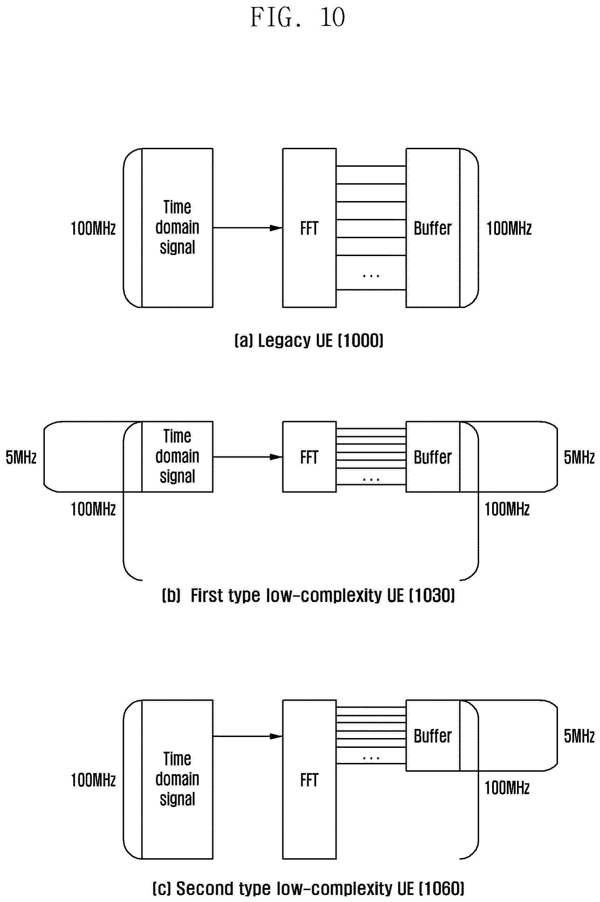

The information on whether SBFD is supported in the first and second schemes may be information (e.g., SBFD resource configuration information in FIG. 10 described later) indirectly indicating whether SBFD is supported, by additionally configuring a part of a downlink resource as an uplink resource in addition to the configuration of TDD uplink (UL)-downlink (DL) resource configuration information indicating a downlink slot (or symbol) resource and an uplink slot (or symbol) resource in TDD, or may be information directly indicating whether SBFD is supported.

In the disclosure, the SBFD-capable UE may receive a synchronization signal block during the initial cell access for accessing a cell (or base station), thereby acquiring cell synchronization. A process of obtaining the cell synchronization may be the same as for an SBFD-capable UE and an existing TDD UE. Thereafter, the SBFD-capable UE may determine whether the cell supports SBFD, through MIB acquisition, SIB acquisition, or a random access process.

System information for transmitting information on whether SBFD is supported may be system information distinguished from and transmitted separately from system information for a UE (e.g., an existing TDD UE) supporting a different version of protocol in a cell, and the SBFD-capable UE may obtain the entirety or part of the system information transmitted separately from the system information for the existing TDD UE, to determine whether SBFD is supported. If the SBFD-capable UE obtains only the system information for the existing TDD UE or system information indicating that SBFD is not supported, the SBFD-capable UE may determine that the cell (or base station) supports only TDD.

If the information on whether SBFD is supported is included in system information for a UE (e.g., an existing TDD UE) supporting a different version of protocol, the information on whether SBFD is supported may be inserted in the last part of the system information not to affect acquisition of the system information of the existing TDD UE. If the SBFD-capable UE fails to obtain the information on whether SBFD is supported, which is inserted in the last part, or obtains information indicating that SBFD is not supported, the SBFD-capable UE may determine that the cell (or base station) supports only TDD.

If the information on whether SBFD is supported is included in system information for a UE (e.g., an existing TDD UE) supporting a different version of protocol, the information on whether SBFD is supported may be transmitted through a separate PDSCH so as not to affect acquisition of the system information of the existing TDD UE. That is, a non-SBFD-supporting UE may receive a first SIB (or SIB1) including existing TDD-related system information through a first PDSCH. An SBFD-supporting UE may receive the first SIB (or SIB) including the existing TDD-related system information through the first PDSCH, and may receive a second SIB including SBFD-related system information through a second PDSCH. The first PDSCH and the second PDSCH may be scheduled through a first PDCCH and a second PDCCH, and a cyclic redundancy code (CRC) of the first PDCCH and the second PDCCH may be scrambled with the same RNTI (e.g., SI-RNTI). The UE may acquire a search space for monitoring the second PDCCH from the first PDSCH's system information and, if fails to acquire the same (that is, if the first PDSCH's system information is not included in information regarding the search space), may receive the second PDCCH in the same search space as the first PDCCH's search space.

As described above, when the SBFD-capable UE determines that the cell (or base station) supports only TDD, the SBFD-capable UE may perform a random access procedure and transmit or receive data/a control signal in the same manner as the existing TDD UE.

A base station may configure a separate random access resource for an existing TDD UE or an SBFD-capable UE (e.g., an SBFD-capable UE supporting duplex communication and an SBFD-capable UE supporting half-duplex communication), and transmit configuration information (e.g., control information or configuration information indicating a time-frequency resource available for a PRACH) on the random access resource to the SBFD-capable UE through system information. The system information for transmitting information on the random access resource may be system information distinguished from and transmitted separately from system information for a UE (e.g., an existing TDD UE) supporting a different version of protocol in a cell.

The base station configures a separate random access resource for each of the SBFD-capable UE and a TDD UE supporting a different version of protocol, thereby being able to distinguish whether the TDD UE supporting the different version of protocol performs a random access or the SBFD-capable UE performs a random access. For example, the separate random access resource configured for the SBFD UE may be a resource that the existing TDD UE determines as a downlink time resource, and the SBFD-capable UE performs a random access through an uplink resource (or separate random access resource) configured in some frequencies of the downlink time resource, so that the base station may determine that the UE which has attempted the random access in the uplink resource is the SBFD-capable UE.

Alternatively, the base station may not configure a separate random access resource for the SBFD-capable UE, and may configure a common random access resource for all UEs in a cell. In this case, the configuration information on the random access resource may be transmitted to all the UEs in the cell through system information, and the SBFD-capable UE having received the system information may perform a random access on the random access resource. Thereafter, the SBFD-capable UE may complete the random access process and may proceed to an RRC connected mode for transmitting/receiving data with the cell. After the RRC connected mode, the SBFD-capable UE may receive, from the base station, an higher layer signal or a physical signal which may be used to determine that some frequency resources of downlink time resources are configured as uplink resources, thereby performing an SBFD operation (for example, transmitting uplink signals in uplink resources). For example, the uplink signal may be transmitted in the uplink resource.

If the SBFD-capable UE determines that the cell supports SBFD, the SBFD-capable UE transmits, to the base station, capability information including at least one of whether the UE supports SBFD, whether the UE supports full-duplex communication or half-duplex communication, and the number of transmission or reception antennas included in (or supported by) the UE, thereby notifying the base station that the UE attempting to access is the SBFD-capable UE. Alternatively, if supporting half-duplex communication is necessarily implemented for the SBFD-capable UE, whether the half-duplex communication is supported may be omitted from the capability information. A report of the SBFD-capable UE on the capability information may be reported to the base station through a random access process, may be reported to the base station after completion of the random access process, or may be reported to the base station after entering the RRC connection mode for transmission or reception of the data with the cell.

The SBFD-capable UE may support half-duplex communication in which only uplink transmission or downlink reception is performed at one time like the existing TDD UE, or may support full-duplex communication in which both uplink transmission and downlink reception are performed at one time. Therefore, the SBFD-capable UE may report, to the base station through capability reporting, whether the SBFD-capable UE supports the half-duplex communication or full-duplex communication, and after the reporting, the base station may configure, for the SBFD-capable UE, whether the SBFD-capable UE is to use half-duplex communication for transmission or reception or is to use full-duplex communication for transmission or reception. If the SBFD-capable UE reports the capability for the half-duplex communication to the base station, since a duplexer generally does not exist, a switching gap for changing an RF between transmission and reception may be required in a case of operating in FDD or TDD.

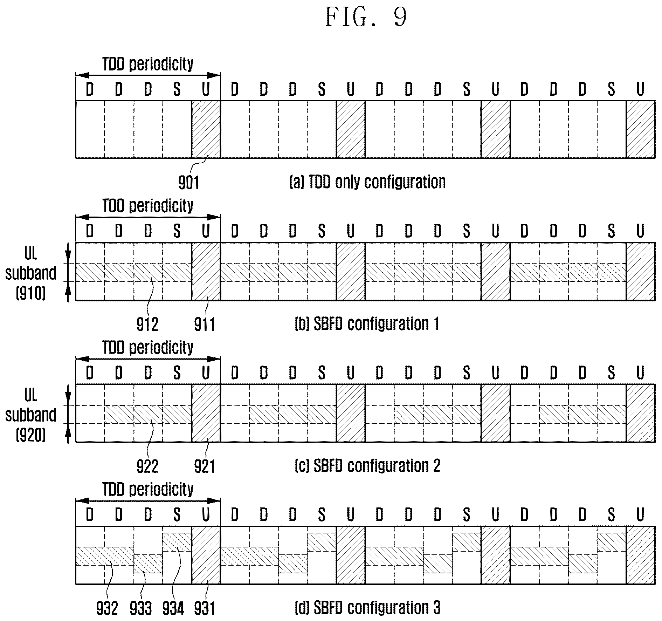

FIG. 9 illustrates an example of operating SBFD in a TDD band of a wireless communication system to which the disclosure is applied.

(a) of FIG. 9 illustrates a case of operating TDD in a specific frequency band. In a cell in which the TDD is operated, a base station may transmit or receive, to or from an existing TDD UE or an SBFD UE, a signal including data/control information in a downlink slot (or symbol), an uplink slot (or symbol) 901, and a flexible slot (or symbol), based on a configuration of TDD UL-DL resource configuration information indicating a downlink slot (or symbol) resource and an uplink slot (or symbol) resource of the TDD.

It may be assumed in FIG. 9 that a DDDSU slot format is configured according to the TDD UL-DL resource configuration information. Here, "D" is a slot consisting entirely of downlink symbols, "U" is a slot consisting entirely of uplink symbols, and "S" is a slot that is neither "D" nor "U", that is, a slot including a downlink symbol, an uplink symbol, or a flexible symbol. For the sake of convenience, S may be assumed to include 12 downlink symbols and two flexible symbols. Also, the DDDSU slot format may be repeated according to the TDD UL-DL resource configuration information. That is, a repetition period of a TDD configuration is 5 slots (5ms for 15 kHz SCS, 2.5ms for 30 kHz SCS, etc.).

Next, (b), (c), and (d) of FIG. 9 illustrate a case in which SBFD is operated together with TDD in a specific frequency band.

Referring to (b) of FIG. 9, some bands among the cell's frequencies may be configured for the UE as a frequency band 910 in which uplink transmission is possible. This band may be referred to as an uplink subband (UL subband). In addition, the uplink subband (UL subband) may be applied to all symbols of all slots. The UE may transmit an uplink channel or signal scheduled for all symbols 912 within the subband (UL subband). However, the UE cannot transmit an uplink channel or signal in a band other than the subband (UL subband).

Referring to (c) of FIG. 9, some bands among the cell's frequencies may be configured for the UE as a frequency band 920 in which uplink transmission is possible, and a time interval in which the frequency band is activated may be configured for the UE. This frequency band may be referred to as an uplink subband (UL subband). In (c) of FIG. 9, the UL subband may be deactivated in the first slot, and may be activated in the remaining slots. Therefore, the UE may transmit an uplink channel or signal in an uplink subband (UL subband) 922 of the remaining slots. That is, the uplink subband (UL subband) is activated in slot units, but whether the uplink subband is activated may be configured in symbol units.

Referring to (d) of FIG. 9, the UE may have a configured time-frequency resource in which uplink transmission is possible. The UE may receive a configuration of one or more time-frequency resources as a time-frequency resource available for uplink transmission. For example, a partial frequency band 932 of the first and second slots may be configured for the UE as a time-frequency resource in which uplink transmission is possible. In addition, a partial frequency band 933 of a third slot and a partial frequency band 934 of a fourth slot may be configured as time-frequency resources available for uplink transmission.

In the following description, a time-frequency resource available for uplink transmission within a downlink symbol or slot may be referred to as an SBFD resource. In addition, a symbol in which an uplink subband is configured within a downlink symbol may be referred to as an SBFD symbol. In addition, a time-frequency resource available for downlink reception within an uplink symbol or slot may be referred to as an SBFD resource. In addition, a symbol in which a downlink subband is configured within an uplink symbol may be referred to as an SBFD symbol.

For the sake of convenience, in this disclosure, a band in which downlink channel or signal reception is possible, excluding an uplink subband, is referred to as a downlink subband. For one symbol, a maximum of one uplink subband and a maximum of two downlink subbands may be configured for the UE. For example, the UE may receive a configuration of one of {uplink subband, downlink subband}, {downlink subband, uplink subband}, and {first downlink subband, uplink subband, second downlink subband} in the frequency domain.

Unless otherwise specifically stated in the description of the disclosure, the overlapping of a PDSCH scheduling region with a UL subband may include overlapping in the time-frequency domain (that is, when a PDSCH is scheduled in the same RB of the same symbol and a UL subband is configured) and overlapping in the time domain (that is, when a PDSCH is scheduled in the same symbol and a UL subband is configured, where the PDSCH scheduling and the UL subband configuration may or may not overlap in the frequency domain).

FIG. 10 illustrates examples of a signal reception method of a legacy UE and a signal reception method of a low-complexity UE.

In (a) of FIG. 10, reference numeral "1000" illustrates an example of a reception method of a legacy UE in an NR system. In the NR system, the legacy UE may need to receive a signal in a region of a predetermined size in the frequency domain.

Here, the region of the predetermined size in the frequency domain may be a frequency region corresponding to 100MHz in frequency range (FR) 1. When 30kHz SCS is assumed, the frequency region of the predetermined size may correspond to a maximum of 275 RBs (or 273 RBs). Therefore, the UE may need to receive a signal of a maximum bandwidth (e.g., 100MHz) and may need to decode the signal. More specifically, the UE may receive an OFDM signal of the maximum bandwidth in the time domain, may convert the time-domain signal into a frequency-domain signal via fast Fourier transform (FFT) corresponding to the maximum bandwidth, and may store the frequency-domain signal in a buffer. The maximum value of the number of samples stored in the buffer may be determined by multiplying the number of RBs corresponding to the maximum bandwidth and the number of sub-carriers included in a single RB. That is, when the UE supports a wider maximum bandwidth, the number of samples to be stored in the buffer after FFT may be increased.

In the NR system, a low-complexity UE (or reduced capability UE, redcap UE) may be employed. The low-complexity UE may have a maximum bandwidth which is narrower than the maximum bandwidth of the legacy UE, and thus, may reduce complexity. Subsequently, two types of low-complexity UEs will be described as follows.

- A first type low-complexity UE is as follows. In (b) of FIG. 10, reference numeral "1030" illustrates an example of a reception method of the first type low-complexity UE in the NR system. In the case of the first type low-complexity UE, a maximum bandwidth of a signal that the UE is capable of receiving may be reduced. For example, the maximum bandwidth may be reduced to 5MHz. In the case of signal reception by the UE, the UE may receive a signal based on a 5MHz bandwidth. Particularly, the UE may receive a signal of a maximum of 5MHz bandwidth among signals in the time domain, may convert the received signal into a frequency-domain signal via FFT corresponding to 5MHz, and may store the frequency-domain signal in a buffer. The maximum value of the number of samples stored in the buffer may be determined by multiplying the number of RBs corresponding to 5MHz and the number of sub-carriers included in a single RB.

In the case of the first type low-complexity UE, the UE may use a smaller size FFT, and the number of samples to be stored in the buffer may be reduced. However, the first type low-complexity UE always receives only signals within a maximum of 5MHz, which is a drawback. Therefore, the legacy UE may select a frequency band with the best channel state in 100MHz and may perform signal transmission or reception. However, the first type low-complexity UE always selects only a consecutive 5MHz frequency band for performing signal transmission or reception and may have low frequency selectivity and thus, deterioration in performance may occur.

- A second type low-complexity UE is as follows. In (c) of FIG. 10, reference numeral "1060" illustrates an example of a reception method of the second type low-complexity UE in the NR system. In the case of second type low-complexity UE, the second type low-complexity UE may receive a signal corresponding to a maximum bandwidth (e.g., 100MHz) same as the maximum bandwidth of the legacy UE, and instead, may store only samples associated with a maximum of 5MHz in a buffer after FFT. Here, the sample to be stored in the buffer after FFT may be determined based on indication by the UE or the base station. More specifically, the UE may receive a signal with a maximum of 100MHz bandwidth in the time domain, may convert the received signal to a frequency-domain signal via FFT corresponding to the 100MHz bandwidth, and may store a portion of the samples of the frequency-domain signal in the buffer. For reference, when 30kHz SCS is assumed and the maximum number of RBs corresponding to the 100MHz bandwidth is 275, the number of samples after FFT may be $275 \times 12 = 3300$ (in the case of 273 RBs, $273 \times 12 = 3276$), but when the number of RBs corresponding to 5MHz is X=12, the number of samples after FFT may be $X \times 12 = 12 \times 12 = 144$. When 15kHz SCS is assumed, X=25. For reference, here, the value of X is an example, and another X value may be available, for example, X=11 in the case of 30KHz SCS, X=24 in the case of 15kHz SCS, or the like.

The second type low-complexity UE has higher complexity than the first type low-complexity UE. Because the second type low-complexity UE uses FFT corresponding to the 100MHz bandwidth. However, the second type low-complexity UE may store, in the buffer, samples corresponding to X RBs in an arbitrary location in the 100MHz bandwidth and thus, may have higher frequency selectivity.

Subsequently, the disclosure will describe scheduling methods of the first type low-complexity UE and the second type low-complexity UE, respectively. For reference, the scheduling methods of the first type low-complexity UE and the second type low-complexity UE may be applied to scheduling of an SBFD UE.

For example, in downlink scheduling, an SBFD UE may receive a signal in only some RBs (RBs included in a DL subband) in a DL BWP during SBFD symbols. Therefore, it may be regarded as the case in which the maximum bandwidth of a signal that the UE is capable of receiving is reduced and thus, the SBFD UE may use the scheduling method of the first type low-complexity UE. In addition, the UE may store only samples of RBs included in a DL subband after FFT and thus, the UE may use the scheduling method of the second type low-complexity UE.

Description will be provided by assuming X=25. However, the disclosure may be applied to another X value. In addition, although the disclosure assumes that the bandwidth of a BWP of the UE is 20MHz (including 106 RBs) and assumes that an SCS is 30kHz, the disclosure is not limited to the example.

First embodiment: Type-0 RA based frequency domain scheduling of first type low-complexity UE.

First, a first type low-complexity UE may be scheduled according to the type-0 resource allocation (RA) based frequency domain scheduling method. In the case of type-0 RA, scheduling may be indicated based on a bitmap. In the type-0 RA based frequency domain scheduling, the number of RBs included in an RBG may be determined based on a size of a BWP configured for the UE as one of 1, 2, 4, 8, and 16 as shown in Table 10. According to Table 10, when the BWP of the UE includes 106 RBs, the number of RBs included in the RBG may be determined to be one of 8 or 16. Here, for ease of description, 8 is assumed but the disclosure is not limited to the example. The UE may generate one RBG by binding a maximum of 8 RBs. Since the BWP of the UE includes 106 RBs, 14 RBGs may be generated, and they may be RBG0 = {RB0, RB1,...,RB7}, RBG1 = {RB8, RB9,...,RB15} ... RBG12 = {RB96, RB97, ..., RB103}, and RBG13 = {RB104, RB105}. For reference, the method described herein is merely one example of binding RBs into an RBG, and other methods of binding RBs may be applicable.

The UE may receive a 14-bit bitmap. An $i^{th}$ bit of the bitmap may indicate whether an $i^{th}$ RBG is scheduled. The first type low-complexity UE may be scheduled with a maximum of X (X=25) consecutive RBs. However, a single RBG includes 8 RBs and thus, the first type low-complexity UE may be scheduled with only a maximum of 24 consecutive RBs. Therefore, the size of the buffer or FFT supported by the UE and the type-0 RA based frequency domain scheduling do not conform to each other, which is a drawback.

Hereinafter, in order to overcome the drawback, a method of improving the scheduling method will be described.

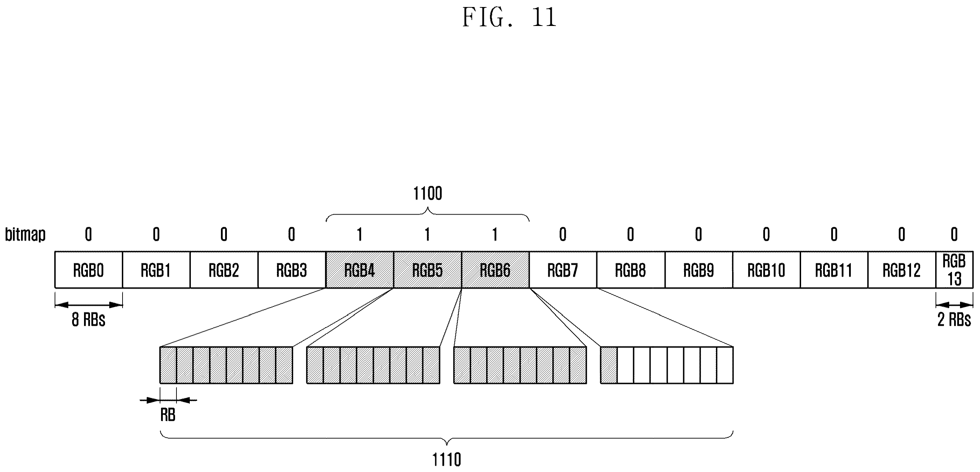

FIG. 11 is a diagram illustrating an example of selecting an RB according to a first method of an embodiment of the disclosure.

According to a first method, a UE may be scheduled with RBGs including a smaller number of RBs than X RBs based on a bitmap, and may additionally select as many RBs as needed (to reach X), which is included in scheduling. A maximum of 3 consecutive RBGs may be indicated to the UE based on the bitmap. For example, bitmap [00001110000000] may be indicated as shown in diagram 1100 and the UE may be scheduled with RBG4, RBG5, RBG6 based on the bitmap. Here, 3 RBGs may include 24 RBs. As RBs that are lacking (e.g., X(=25)-24=1), RBs adjacent to the consecutive RBGs may be selected. For example, when RBs are short by 1, the UE may select one RB adjacent to an RB with the highest frequency among the RBs in the consecutive (or indicated) RBG(s). In FIG. 11, since RBG4, RBG5, and RBG6 are indicated as shown in diagram 1100, an RB (RB adjacent to RBG6) with the lowest frequency in RBG7 may be additionally selected. For example, when RBs are short by 1, the UE may select one RB adjacent to an RB with the lowest frequency among the RBs in the consecutive (or indicated) RBG(s). For example, when RBG 4, 5, and 6 are indicated, an RB (RB adjacent to RBG6) with the highest frequency in the RBGs may be selected.

When the number of RBs that are lacking is higher than 1, the UE may select A RBs among RBs with higher frequency and adjacent to the consecutive RBG(s), and may select B RBs among RBs with lower frequency and adjacent to the consecutive RBG(s). Here, A+B is the number of RBs that are lacking. Here, A and B may be given as {A = the number of RBs that are lacking, B=0} or {A=0, B = the number of RBs that are lacking}, or {A = ceil (the number of RBs that are lacking/2), B = floor(the number of RBs that are lacking/2)} or {A = floor(the number of RBs that are lacking/2), B = ceil(the number of RBs that are lacking/2)}, or the like. For example, when an RB with higher frequency than the RBG indicated by the bitmap does not exist or when the number of RBs is smaller than the number of RBs to be additionally selected, A may be the number of all RB(s) with higher frequency than the RBG and B may be the number of RBs that are lacking - A. In addition, for example, when an RB with lower frequency than the RBG does not exist or when the number of RBs is smaller than the number of RBs to be additionally selected, B may be the number of all RB(s) with lower frequency than the RBG and A may be (the number of RBs that are lacking - B).

The UE may select as many RBs as are lacking, always or under a predetermined condition.

For example, when a maximum number of RBGs (a maximum of 3 RBGs in the case of X=25) are indicated to the UE based on the bitmap, the UE may always select as many RBs as are lacking. That is, when a maximum number of RBGs are indicated, the UE may select X (X=25) RBs via additional RB selection.

Alternatively, when a maximum number of RBG(s) (a maximum of 3 RBGs in the case of X=25) are indicated based on the bitmap, the UE, based on predetermined information, may select only RBs (3 RBGs * 8 RBs/RBG = 24 RBs) included in the RBGs or may select X RBs. Here, the predetermined information may be included (in a new field) in scheduling DCI. The predetermined information may be 1 bit. That is, for example, when the predetermined information is '0', the UE may select only 24 RBs, and when the predetermined information is '1', the UE may select X RBs. As another method, the information may be indicated via a field included in the scheduling DCI.

As a first example, when a modulation and coding scheme (MCS) field indicates a predetermined value, X RBs may be selected. For example, when the MCS field indicates some values (e.g., indices greater than or equal to some values among indices of the MCS field or values greater than or equal to some values among spectral efficiency values indicated by the MCS field, or values that are at least some values higher than a modulation (QPSK, 16QAM, 64QAM, or 256QAM) indicated by the MCS field), X RBs may be selected, and when the MCS field indicates some other values, only RBs included in the indicated RBG may be selected. Alternatively, when the MCS field is one of predetermined values included in a first set, X RBs may be selected, and when the MCS field is one of other predetermined values included in a second set, only RBs included in the indicated RBs may be selected. The indication may be performed by configuring another field, instead of the MCS field, to a predetermined value.

As a second example, when the bitmap indicates 3 consecutive RBGs and additionally indicates another RBG, X RBs may be selected. For example, when 3 consecutive RBGs are indicated by a 14-bit bitmap as shown in [00001110000000], the UE may select only RBs included in the indicated 3 RBGs. However, another '1' exists in addition to '1' indicating 3 consecutive RBGs, in the 14-bit bitmap as shown in [00001110000001], the UE may select X RBs. The other '1' may not be located at a bit that follows '1' indicating 3 consecutive RBGs.

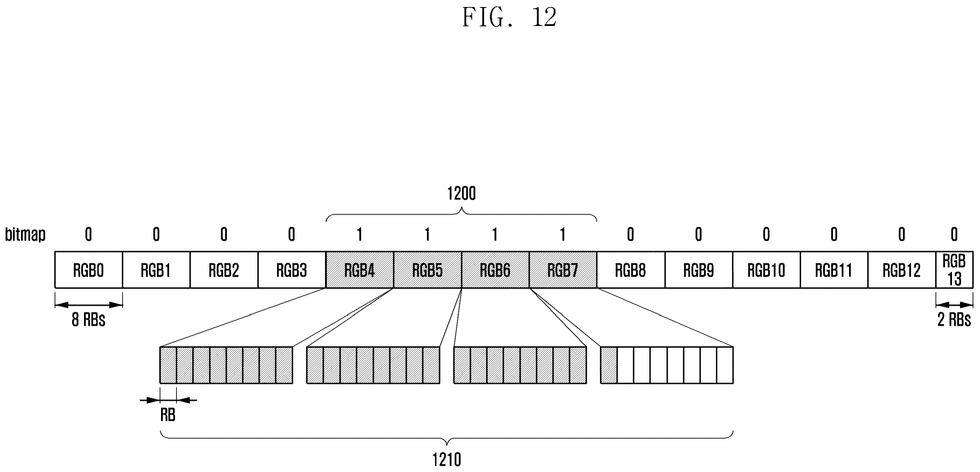

FIG. 12 is a diagram illustrating an example of selecting an RB according to a second method of an embodiment of the disclosure.

According to a second method, a UE may be scheduled with RBGs including a larger number of RBs than X RBs based on a bitmap, and may additionally identify RBs that are not included in scheduling among the scheduled RBs. A maximum of 4 consecutive RBGs may be indicated to the UE based on the bitmap. For example, bitmap [00001111000000] 1200 may be indicated as shown in FIG. 12, and RBG4, RBG5, RBG6, and RBG7 may be scheduled based on the bitmap. When 4 RBGs are indicated, 32 RBs may be selected based on the bitmap. However, the UE may receive a signal in a maximum of 25 RBs, 25 RBs may need to be selected from among the 32 RBs. A method for this is as follows.

According to method 2-1, the UE may select X (X=25) RBs located in the lowest frequency among the indicated 32 RBs 1200. Diagram 1210 is the case in which the UE selects X (X=25) RBs with the lowest frequency.

According to method 2-2, the UE may select X (X=25) RBs located in the highest frequency among the indicated 32 RBs.

According to method 2-3, the UE may select X (X=25) RBs located in the middle frequency among the indicated 32 RBs.

According to method 2-4, the UE may select 25 RBs from among the 32 RBs according to the implementation by the UE.

Here, methods 2-1, 2-2, and 2-3 may assume that the UE and a base station are mutually aware of which RBs to select (or agree or are configured in advance to select which RBs). That is, the base station is aware of which X (X=25) RBs that the UE is to select and thus, the base station may transmit a signal in the X (X=25) RBs. According to method 2-4, the base station, however, does not know a location from which the UE is to select 25 RBs. Therefore, the base station may need to transmit a signal so that the UE is capable of receiving the signal in all implementation by the UE.

In method 2-4, a signal transmission method by the base station is as follows.

First, the base station may need to generate a transport block to transmit. Here, a length (transport block size (TBS)) of a transport block may be determined based on the number of RBs scheduled for the UE. The base station schedules 32 RBs for the UE, but the UE selects only X (X=25) RBs and thus, the base station may generate a transport block by assuming and determining the length of the transport block based on the number of 25 RBs. For reference, the base station may generate a transport block by assuming the number of 32 RBs. In this instance, the UE receives only X (X=25) RBs and thus, a reception success probability of a signal may be low.

The base station may transmit a transport block generated based on 25 RBs in 32 RBs. That is, rate matching may be performed based on a length (N) of coded bits so that the transport block of the TBS (K), generated based on 25 RBs, is transmitted in 32 RBs. Here, a code rate after rate matching may be N/K. Here, the base station may map the generated transport block to 32 RBs in ascending frequency order and may transmit the same. That is, the base station generates the transport block based on the number of 25 RBs, but the number of RBs that the base station actually uses for signal transmission may be 32. That is, the number of RBs of the transport block generated by the base station and the number of RBs that are actually used for transmission are different. However, the generated transport block (length of K) may be encoded with an LDPC code (via rate matching) and coded bits (length of N) corresponding to 32 RBs may be transmitted in the 32 RBs.

The UE may select 25 consecutive RBs from among the 32 RBs. Here, a method of selecting 25 RBs is based on the implementation by the UE. However, the UE assumes that the length of the transport block is based on the number of 25 RBs. In addition, the UE may be aware that the transport block is mapped to 32 RBs in ascending frequency order and is transmitted. Therefore, although the UE selects 25 RBs arbitrarily from among 32 RBs, the UE may receive a signal including the transport block by decoding the coded bits received in the 25 RBs.

As another example, the TBS may be determined based on the number of RBs indicated to the UE based on the bitmap. 32 RBs may be indicated to the base station based on the bitmap, and thus the base station may assume and determine the length of a transport block based on the number of 32 RBs and may generate the transport block.

The base station may transmit the transport block generated based on the 32 RBs in 32 RBs. That is, rate matching may be performed based on a length (N) of coded bits so that the length (K) of the transport block, generated based on the number of 32 RBs, is transmitted in 32 RBs. Here, a code rate after rate matching may be N/K. Here, the base station may map the generated transport blocks to 32 RBs in ascending frequency order and may transmit the same. The number of RBs of the transport block generated by the base station and the number of RBs that are actually used for transmission are the same.

The UE may select 25 consecutive RBs from among the 32 RBs. Here, a method of selecting 25 RBs is based on the implementation by the UE. However, the UE assumes that the length of the transport block is based on the number of 25 RBs. In addition, the UE may be aware that the transport block is mapped to 32 RBs in ascending frequency order and is transmitted. Therefore, although the UE selects 25 RBs arbitrarily from among 32 RBs, the UE may receive a signal including the transport block by decoding the coded bits received in the 25 RBs.

According to a third method, although a UE may be scheduled with a smaller number of RBs than X RBs, the UE may receive a signal by assuming that a TBS is based on X RBs. A maximum of 3 consecutive RBGs may be indicated to the UE based on a bitmap. The UE may receive a signal via RBs (i.e., 24 RBs in this case) included in the 3 RBGs, and the UE may assume that a transport block is generated by determining, based on 25 RBs, the length of the transport block of the signal transmitted in the RBs. That is, in the first method, the UE determines RBs that are lacking, may select X (X=25) RBs, and may receive a signal in the selected RBs. However, in the third method, the UE may disregard the RBs that are lacking, but may perform reception by assuming that the length of the transport block transmitted by the base station is determined based on the number of RBs (X=25). In this instance, the UE disregards the RBs that are lacking and thus, a transmission failure probability may be increased. However, the UE may omit a process of selecting the RBs that are lacking. In addition, the transmission failure probability may be overcome when the base station selects an appropriate MCS.

A combination of at least one of the methods described above may be used and use of at least one of the methods may be defined or configured. The configuration may be performed via, for example, higher layer signaling or the like.

Second embodiment: New frequency domain scheduling of first type low-complexity UE.

The first embodiment assumes legacy type-0 frequency domain scheduling. Therefore, an RBG is generated based on a BWP size and thus, a maximum of X RBs may not be scheduled, which is a drawback. Here, a new method for the frequency domain scheduling method will be described.

A method for a UE to select a maximum of 25 consecutive RBs is as follows.

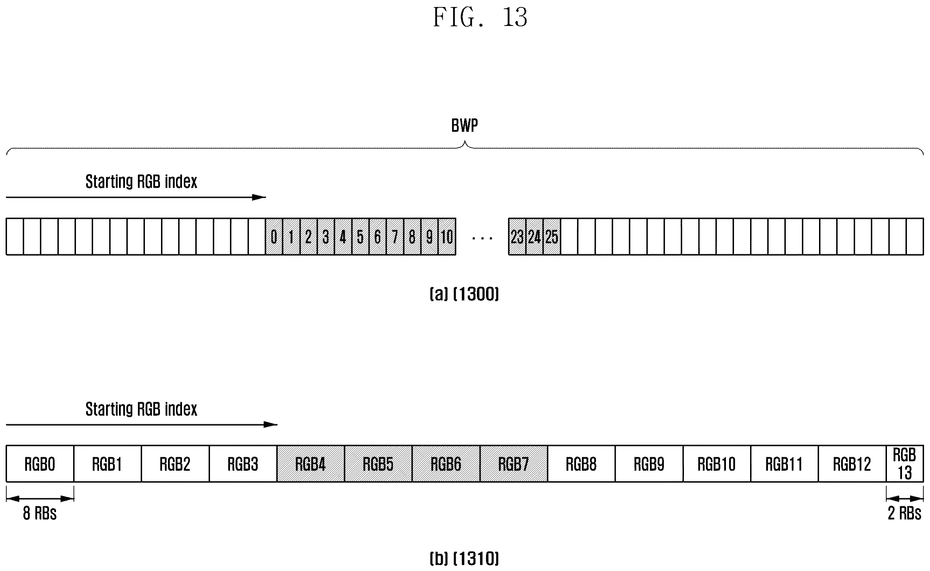

FIG. 13 illustrates examples of a new frequency domain scheduling method according to the disclosure.

In (a) in FIG. 13, reference numeral "1300" illustrates a first method. A start RB index for 25 RBs is indicated to a UE by a base station. The UE may select X (X=25) consecutive RBs from the start RB index. For reference, the start RB index may be one of 0, 1, 2, ..., and the number of RBs included in a BWP - X. That is, when the number of RBs included in the BWP is 106, the start RB index may be 0, 1, 2, ..., or 106-25 = 81. They may be referred to as candidate RBs. The UE may generate an RBG by binding X candidate RBs. Here, a method of binding candidate RBs is as follows. The number of RBs included in one RBG may be one of 1, 2, 4, 8, and 16. For example, it is assumed to be 8. The value may be determined based on a size of a BWP configured for the UE. Alternatively, the value may be determined based on the X value of the UE. That is, for example, in Table 10, the X value, instead of the size of the BWP, may be used, but the method is not limited to the example of Table 10. Among the RBGs, which RBGs are scheduled may be indicated based on a bitmap. When the candidate RBs in the case of X=5 are bound into 4 RBGs (one RBG includes 8 RBs), the bitmap may include 4 bits.

According to the first method, the number of bits needed for scheduling may be as follows. In order to indicate the start RB index, ceil(log2(the number of RBs included in a BWP - X +1)) = ceil(log2(82)) = 7 bits are needed, and 4 bits are needed to indicate the RBGs and thus, a total of 11 bits are needed for scheduling.

In the first embodiment, when type-0 RA is used, a 14-bit bitmap is needed. However, according to the method, 11 bits are needed and thus, the amount of information needed for scheduling is reduced by 3 bits.

In the first method, as the number of RBs included in an RBG, a smaller value may be selected. For example, as compared with the type-0 RA method, the amount of information needed for scheduling is reduced by 3 bits and thus, the three bits may be used as a bitmap. Therefore, the candidate RBs in the case of X=25 may be bound into 7 RBGs. Here, the number of RBs included in a single RBG may be 4. This may be, among 1, 2, 4, 8, and 16, the smallest value that enables 7 RBGs or less to be bound. In this instance, the start RB index is indicated using 7 bits of the 14 bits, and which RBG is scheduled in units of 4 RBs (or in a unit of an RBG including 4 RBs) may be indicated by using each bit of the remaining 7 bits.

In the first method, the start RB index is indicated based on a single RB. According to another method, the start RB index may be indicated based on multiple RBs, for example, 2 RBs, 4 RBs, or the like. According to another method, the start RB may be indicated based on an RBG. That is, the UE may preferentially bind RBs in the BWP into an RBG, and an index of a start RBG for selecting X (X=25) RBs among the RBGs may be indicated. The UE may select X (X=25) RBs based on the start RBG index. Here, the start RBG index may be allocated in ascending frequency order. When the start RBG index is 0, this indicates the lowest RBG in the frequency axis, and X (X=25) RBs may be selected from an RB with the lowest frequency among the RBs included in an RBG corresponding to the start RBG index. In this instance, the number of RBGs obtained by binding RBs in the BWP is 14 and thus, the base station may indicate the index of the start RBG index with 4 bits. As compared with the first method, the bits for indicating the start RB may be reduced by 3 bits. In (b) of FIG. 13, reference numeral "1310" illustrates a new frequency domain scheduling method that indicates a start RB using an index of a start RBG based on an RBG according to the above-described method.

A combination of at least one of the methods described above may be used and use of at least one of the methods may be defined or configured. The configuration may be performed via, for example, higher layer signaling or the like.

Third embodiment: Frequency hopping of first type low-complexity UE.

A first type low-complexity UE may receive only a maximum of X consecutive RBs. In the case in which a signal to be received is repeatedly transmitted, when the UE receives only X RBs in the same location, there is no frequency diversity. Therefore, in the case of repetitive transmission, the UE may obtain frequency diversity by receiving X RBs in different locations. This may be referred to as frequency hopping.

To support frequency hopping, the UE may be configured, by a higher layer, with a frequency hopping interval. When the UE performs reception, a lowest RB index among the RBs that receives X RBs is denoted by $RB_{low}$. When the UE receives a signal that is repeatedly transmitted, the lowest RB index among the RBs that receives the X RBs may be determined as follows.

According to a first method, the lowest RB index may be $RB_{low}$ or $RB_{low}$ + offset. Here, the offset may be a value that is configured as a frequency hopping interval for the UE via higher layer signaling. When the value of $RB_{low}$ + offset exceeds the size of a BWP, the lowest RB index may be determined to be ($RB_{low}$ + offset) mod $BWP_{size.}$. Here, $BWP_{size}$ denotes the number of RBs included in the BWP. The UE may use $RB_{low}$ for odd-numbered repetitions and may use ($RB_{low}$ + offset) mod $BWP_{size}$ for the even-numbered repetitions. Here, the UE may receive a signal via 2 hops.

According to a second method, the lowest RB index may be $RB_{low}$ or $RB_{low}$ + i X offset. Here, the offset may be a value that is configured as a frequency hopping interval for the UE via higher layer signaling. When the value of $RB_{low}$ + i X offset exceeds the size of the BWP, it may be determined to be ($RB_{low}$ + i X offset) mod $BWP_{size}$. Here, $BWP_{size}$ denotes the number of RBs included in the BWP. The UE may use $RB_{low}$ for a first repetition, may use ($RB_{low}$ + 1 X offset) mod $BWP_{size}$ (i=1) for a second repetition, and may use ($RB_{low}$ + 2 X offset) mod $BWP_{size}$ (i=2) for a third repetition, ..., and may use ($RB_{low}$ + (n-1) X offset) mod $BWP_{size}$ (i=n-1) for an $n^{th}$ repetition. Here, the UE may receive a signal via multiple hops.

For reference, when at least one RB among X RBs included in a predetermined hop in $n^{th}$ repetition transmission is beyond the BWP, the UE may not receive the $n^{th}$ repetition transmission. When at least one RB among the X RBs included in the predetermined hop is beyond the BWP, the base station may not perform $n^{th}$ repetition transmission.

For reference, when at least one RB among the X RBs included in the predetermined hop in $n^{th}$ repetition transmission is beyond the BWP, the UE may receive the $n^{th}$ repetition transmission at a next hop. When at least one RB among the X RBs included in the predetermined hop is beyond the BWP, the base station may not perform $n^{th}$ repetition transmission and may transmit data at a next hop.

According to a third method, the lowest RB index may be configured to $RB_{low}$ or $RB_{low}$ + offset or $RB_{low}$ + offset2. Here, offset and offset2 may be values that are configured as frequency hopping intervals for the UE via higher layer signaling. When $RB_{low}$ + offset exceeds the size of the BWP, it may be determined to be ($RB_{low}$ + offset) mod $BWP_{size}$. When $RB_{low}$ + offset2 exceeds the size of the BWP, it may be determined to be ($RB_{low}$ + offset2) mod $BWP_{size}$. Here, $BWP_{size}$ denotes the number of RBs included in the BWP. The UE may use $RB_{low}$ for first, fourth, seventh, ..., repetitions, may use ($RB_{low}$ + offset) mod $BWP_{size}$ for second, fifth, and eighth repetitions, and may use ($RB_{low}$ + offset2) mod $BWP_{size}$ for third, sixth, and ninth repetitions. Here, the UE may receive a signal via 3 hops.

A combination of at least one of the methods described above may be used and use of at least one of the methods may be defined or configured. The configuration may be performed via, for example, higher layer signaling or the like.

Fourth embodiment: Type-0 RA based frequency domain scheduling of second type low-complexity UE.

The first embodiment described above assumes a first type low-complexity UE. The first embodiment may be extended to be applied to a second type low-complexity UE.

A base station may perform scheduling with respect to the second type low-complexity UE using the type-0 RA based frequency domain scheduling method. In the case of type-0 RA, scheduling may be indicated based on a bitmap. In the type-0 RA based frequency domain scheduling, the number of RBs included in an RBG may be one of 1, 2, 4, 8, and 16, which is determined based on a size of a BWP configured for the UE. According to Table 10, when the BWP of the UE includes 106 RBs, the number of RBs included in the RBG may be determined to be one of 8 or 16. Here, for ease of description, 8 is assumed but the disclosure is not limited to the example. The UE may generate one RBG by binding a maximum of 8 RBs. Since the BWP of the UE includes 106 RBs, 14 RBGs may be generated, and they may be RBG0 = {RB0, RB1,...,RB7}, RBG1 = {RB8, RB9,...,RB15} ... RBG12 = {RB96, RB97, ..., RB103}, and RBG13 = {RB104, RB105}. For reference, the method described herein is merely one example of binding RBs into an RBG, and other methods of binding RBs may be applicable.

The UE may receive a 14-bit bitmap. An $i^{th}$ bit of the bitmap may indicate whether an $i^{th}$ RBG is scheduled. The second type low-complexity UE may be scheduled with a maximum of X (X=25) consecutive RBs. However, a single RBG includes 8 RBs and thus, the second type low-complexity UE may be scheduled with only a maximum of 24 consecutive RBs. Therefore, the size of a buffer or FFT supported by the UE and the type-0 RA based frequency domain scheduling do not conform to each other, which is a drawback.

A method to solve the drawback is disclosed.

According to a first method, a UE may be scheduled with RBGs including a smaller number of RBs than X RBs based on a bit map, and may additionally select as many RBs as a number required (to reach X), which is included in scheduling. A maximum of 3 RBGs may be indicated to the UE based on the bitmap. Here, 3 RBGs may include 24 RBs. As RBs that are lacking (e.g., X(=25)-24=1), RBs adjacent to the indicated RBGs may be selected. For example, when RBs are short by 1, the UE may select one RB adjacent to an RB with the highest frequency among the RBs in the indicated RBGs. For example, when RBGs 4, 8, and 9 are indicated based on the bitmap, the UE may select an RB with the lowest frequency of RBG 10. Alternatively, when RBs are short by 1, the UE may select one RB adjacent to an RB with the lowest frequency among the RBs in the indicated RBGs. For example, when RBGs 4, 8, and 9 are indicated based on the bitmap, the UE may select an RB with the highest frequency of RBG 3.

When the number of RBs that are lacking is greater than 1, the UE may select A RBs from among RBs adjacent to the RB with the highest frequency and B RBs from among RBs adjacent to the RB with the lowest frequency, among the RBs of the indicated RBGs. Here, A+B is the number of RBs that are lacking. Here, A and B may be given as {A = the number of RBs that are lacking, B=0} or {A=0, B = the number of RBs that are lacking}, or {A = ceil (the number of RBs that are lacking/2), B = floor(the number of RBs that are lacking/2)} or {A = floor(the number of RBs that are lacking/2), B = ceil(the number of RBs that are lacking/2)}, or the like. For example, when RBs with higher frequency than the RBG indicated by the bitmap do not exist or when the number of the RBs is less than the number of RBs to be additionally selected, A may be all RB(s) with higher frequency than the RBG and B may be the number of RBs that are lacking - A. In addition, for example, when RBs with lower frequency than the RBG indicated by the bitmap do not exist or when the number of the RBs is less than the number of RBs to be additionally selected, B may be all RB(s) with lower frequency than the RBG and A may be the number of RBs that are lacking - B.

The UE may select as many RBs as are lacking, always or under a predetermined condition.

For example, when a maximum number of RBGs (a maximum of three RBGs in the case of X=25) are indicated to the UE based on the bitmap, the UE may always select as many RBs as are lacking. That is, when a maximum number of RBGs are indicated, the UE may select X ( X=25) RBs via additional RB selection.

Alternatively, when a maximum number of RBG(s) (a maximum of 3 RBGs in the case of X=25) are indicated based on the bitmap, the UE may select only RBs (3 RBGs X 8 RBs/RBG = 24 RBs) included in the RBGs based on predetermined information, or may select X RBs. Here, the predetermined information may be included (in a new field) in scheduling DCI. The predetermined information may be 1 bit. That is, for example, when the predetermined information is '0', the UE may select only 24 RBs, and when the predetermined information is '1', the UE may select X RBs. As another example, the information may be indicated via a field included in the scheduling DCI.

For example, when an MCS field indicates a predetermined value, X RBs may be selected. For example, when the MCS field indicates some values (e.g., indices greater than or equal to some values among indices of the MCS field, or values greater than or equal to some values among spectral efficiency values indicated by the MCS field, or values that are at least some values higher than a modulation (QPSK, 16QAM, 64QAM, or 256QAM) indicated by the MCS field), X RBs may be selected, and when the MCS field indicates some other values, only RBs included in the indicated RBG may be selected. Alternatively, when the MCS field is one of predetermined values included in a first set, X RBs may be selected, and when the MCS field is one of other predetermined values included in a second set, only RBs included in the indicated RBs may be selected. The indication may be performed by configuring another field, instead of the MCS field, to a predetermined value.

According to a second method, a UE may be scheduled with RBGs including a larger number of RBs than X RBs based on a bitmap, and may additionally identify RBs that are not included in scheduling among the scheduled RBs. A maximum of 4 RBGs may be indicated to the UE based on the bitmap. When 4 RBGs are indicated, 32 RBs may be indicated based on the bitmap. However, the UE may be capable of receiving a signal in a maximum of 25 RBs and thus, may select 25 RBs from the 32 RBs. A method for this is as follows.

According to method 2-1, the UE may select X (X=25) RBs located in the lowest frequency among the 32 RBs.

According to method 2-2, the UE may select X (X=25) RBs located in the highest frequency among the 32 RBs.

According to method 2-3, the UE may select X (X=25) RBs located in the middle frequency among the 32 RBs.

According to method 2-4, the UE may select 25 RBs from among the 32 RBs according to the implementation by the UE.

Here, methods 2-1, 2-2, and 2-3 may assume that the UE and the base station are mutually aware of which RBs to select (or agree or are configured in advance to select which RBs). That is, the base station is aware of which X (X=25) RBs that the UE is to select and thus, the base station may transmit a signal in the X (X=25) RBs. According to method 2-4, the base station, however, does not know a location from which the UE is to select 25 RBs. Therefore, the base station may need to transmit a signal so that the UE is capable of receiving the signal in all implementation by the UE.

In method 2-4, a signal transmission method by the base station is as follows.

First, the base station may need to generate a transport block to transmit. Here, a length of the transport block (TBS) may be determined based on the number of RBs scheduled for the UE. The base station schedules 32 RBs for the UE, but the UE selects only X (X=25) RBs and thus, the base station may generate the transport block by assuming and determining the length of the transport block based on the number of 25 RBs. For reference, the base station may generate the transport block by assuming 32 RBs. In this instance, the UE receives only X (X=25) RBs and thus, a reception success probability of a signal may be low.

The base station may transmit the transport block, generated based on the number of 25 RBs, in 32 RBs. That is, rate matching may be performed based on a length (N) of coded bits so that the transport block of the TBS (K), generated based on the number of 25 RBs, is transmitted in 32 RBs. Here, a code rate after rate matching may be N/K. Here, the base station may map the generated transport blocks to 32 RBs in ascending frequency order, and may transmit the same. That is, the base station generates the transport block based on the number of 25 RBs, but the number of RBs that the base station actually uses for signal transmission may be 32. That is, the number of RBs of the transport block generated by the base station and the number of RBs actually used for transmission are different. However, the generated transport block (length of K) may be encoded with an LDPC code (via rate matching) and coded bits (length of N) corresponding to 32 RBs may be transmitted in the 32 RBs.

The UE may select 25 RBs from among the 32 RBs. Here, a method of selecting 25 RBs is based on the implementation by the UE. However, the UE assumes that the length of the transport block is based on the number of RBs (25 RBs). In addition, the UE may be aware that the transport block is mapped to 32 RBs in ascending frequency order and is transmitted. Therefore, although the UE selects 25 RBs arbitrarily from among the 32 RBs, the UE may receive a signal including the transport block by decoding the coded bits received in the 25 RBs.

As another example, the TBS may be determined based on the number of RBs indicated to the UE based on the bitmap. 32 RBs may be indicated to the base station based on the bitmap, and thus the base station may assume and determine a length of a transport block based on the number of 32 RBs and may generate the transport block.

The base station may transmit the transport block, generated based on the 32 RBs, in 32 RBs. That is, rate matching may be performed based on a length (N) of coded bits so that the length (K) of the transport block, generated based on 32 RBs, is transmitted in 32 RBs. Here, a code rate after rate matching may be N/K. Here, the base station may map the generated transport blocks to 32 RBs in ascending frequency order and may transmit the same. The number of RBs of the transport block generated by the base station and the number of RBs that are actually used for transmission may be the same.

The UE may select 25 consecutive RBs from among the 32 RBs. Here, a method of selecting 25 RBs is based on the implementation by the UE. However, the UE may assume that the length of the transport block is based on the number of 25 RBs. In addition, the UE may be aware that the transport block is mapped to 32 RBs in ascending frequency order and is transmitted. Therefore, although the UE selects 25 RBs arbitrarily from among 32 RBs, the UE may receive a signal including the transport block by decoding the coded bits received in the 25 RBs.

According to a third method, although a UE is scheduled with a smaller number of RBs than X RBs, the UE may receive a transport block the length of which is based on X RBs. A maximum of 3 RBGs may be indicated to the UE based on a bitmap. The UE may receive a signal via RBs (i.e., 24 RBs in this case) included in the 3 RBGs, and the UE may assume that a transport block is generated by determining, based on 25 RBs, the length of the transport block of the signal transmitted in the RBs. That is, in the first method, the UE determines RBs that are lacking, may select X (X=25) RBs, and may receive a signal in the selected RBs. However, in the third method, the UE may disregard the RBs that are lacking, but may perform reception by assuming that the length of the transport block transmitted by the base station is determined based on the number of RBs (X=25). In this instance, the UE disregards the RBs that are lacking and thus, a transmission failure probability may be increased. However, the UE may omit a process of selecting the RBs that are lacking. In addition, the transmission failure probability may be overcome when the base station selects an appropriate MCS.

A combination of at least one of the methods described above may be used and use of at least one of the methods may be defined or configured. The configuration may be performed via, for example, higher layer signaling or the like.

Fifth embodiment: Type-1 RA based frequency domain scheduling of first/second type low-complexity UE.

In the first through fourth embodiments described above, a method of scheduling a maximum of X (X=25) RBs for a UE is provided. However, when type-0 RA based frequency domain scheduling is configured for the UE, the UE may not expect X (X=25) RB scheduling. That is, a base station may schedule a maximum number of RBGs (herein, 3 RBGs) according to the type-0 RA based frequency domain scheduling method, and although the number of RBs corresponding to the maximum number of RBGs is smaller than X=25, the number may be used as the maximum number of RBs as a limitation. That is, according to the type-0 RA based frequency domain scheduling method, each RBG includes 8 RBs and a maximum of 3 RBGs may be scheduled and thus, the maximum number of RBs may be limited to 24 (=8X3) although X=25 is configured. Therefore, this may not be applied to the above described first through fourth embodiments, but a maximum transmission speed of the UE may be decreased. This is limited to the case in which scheduling is performed according to the type-0 RA based frequency domain scheduling method. When scheduling is performed according to the type-1 RA based frequency domain scheduling method, the UE may assume X=25.

The type-1 RA based frequency domain scheduling method may be used for the base station and the UE to perform X (X=25) RB scheduling.

In a fifth embodiment, frequency domain scheduling may be configured for a low-complexity UE according to the type-1 RA based method. Via the type-1 RA based frequency domain scheduling, a start RB index and the number of consecutive RBs may be indicated to the UE. Here, the start RB index may be one of 0, 1, ..., and $BWP_{size}$ -1. $BWP_{size}$ denotes the number of RBs included in a BWP. The number of consecutive RBs may be one of 1, 2, ..., and X=25. When a value greater than X=25 is indicated as the number of consecutive RBs, the UE may determine the case as an error case.

It is assumed that a start RB index and the number of consecutive RBs are indicated to the UE.

A first and/or second type low- complexity UE may receive a signal in the indicated RBs. However, only a maximum of 25 consecutive RBs are scheduled and thus, there is limited frequency diversity. Therefore, interleaving that distributes 25 consecutive RBs to the frequency domain may be considered.

In this instance, in the case of the second type low-complexity UE, interleaving that distributes a maximum of 25 consecutive RBs to a maximum bandwidth (e.g., 100MHz) may be available. That is, a maximum of 25 consecutive RBs may be distributed to the maximum bandwidth via interleaving.

However, in the case of the first type low-complexity UE, a maximum of 25 consecutive RBs need to be located in the 25 consecutive RBs although they are distributed. Therefore, distribution for interleaving needs to be performed within a maximum of X (X=25) RBs. Here, a bandwidth in which interleaving is performed is referred to as an interleaving bandwidth, and the bandwidth may include X (X=25) RBs.

When the start RB index and the number of consecutive RBs are indicated to the UE, the UE may need to determine an interleaving bandwidth for interleaving. A method for this is provided.

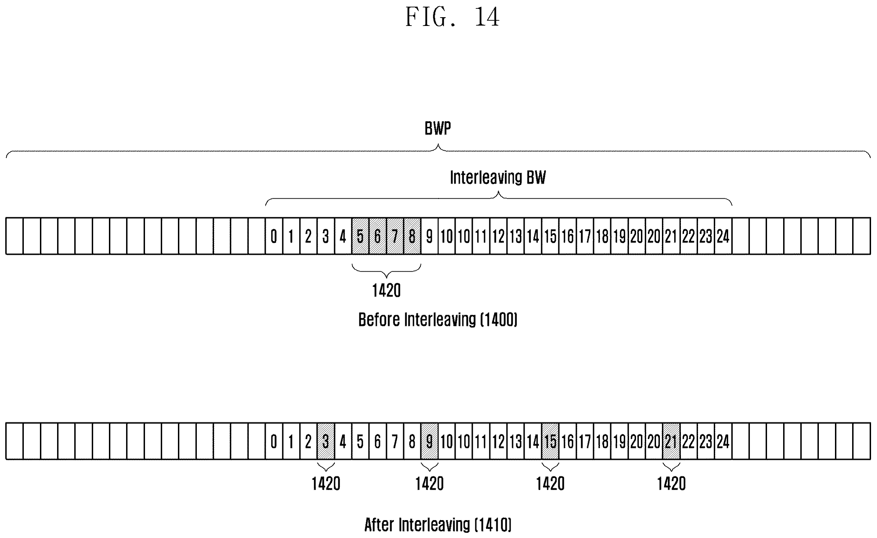

FIG. 14 is a diagram illustrating an example of RB selection before interleaving and RB selection after interleaving, according to an interleaving bandwidth. Highlighted RBs 1420 in FIG. 14 are scheduled RBs.

According to a first method, a UE may bind RBs in a BWP by X (X=25) and may determine the same as an interleaving bandwidth. Here, when RBs are bound, one RB may be included in only one interleaving bandwidth. For example, when the BWP includes 106 RBs, a first interleaving bandwidth includes RB0 to RB24, a second interleaving bandwidth includes RB25 to RB49, a third interleaving bandwidth includes RB50 to RB74, a fourth interleaving bandwidth includes RB75 to RB99, and a fifth interleaving bandwidth includes RB100 to RB105. Scheduled RBs which are determined based on a start RB index and the number of consecutive RBs may need to be always included in one interleaving bandwidth. Conversely, when scheduled RBs are included in two or more interleaving bandwidths, the UE may consider the case as an error case. Based on the scheduled RBs, the UE may determine an interleaving bandwidth where RBs to be interleaved are located. The UE may distribute the scheduled consecutive RBs based on the interleaving bandwidth. Here, the distributed RBs may not go beyond the interleaving bandwidth.

According to the first method, RBs may be scheduled for the UE within one interleaving bandwidth and thus, there may be a limitation in scheduling. Therefore, a scheduling method may be changed in consideration of an interleaving bandwidth. For example, the UE may receive an indicator indicating one interleaving bandwidth (e.g., indicator indicating one of 5 interleaving bandwidths, ceil(log2(5)) = 3 bits) and an indicator indicating a start RB index in the interleaving bandwidth and the number of consecutive RBs. Here, the start RB index in the interleaving bandwidth may be one of 0, 1, 2, ..., and X-1, and the number of consecutive RBs may be one of 1, 2, 3, ..., and X. For example, when one interleaving bandwidth includes 25 RBs, the indicator may be ceil(log2(XX(X+1)/2)) = ceil(log2(25X26/2)) = 9 bits. Therefore, a total of 12 bits may be used.

According to a second method, a UE may determine an interleaving bandwidth based on scheduled RB(s). For example, the UE may determine, as an interleaving bandwidth, X (X=25) RBs in ascending frequency order from the lowest RB in the frequency domain among the scheduled RBs. Alternatively, for example, the UE may determine, as an interleaving bandwidth, X (X=25) RBs in descending frequency order from the highest RB in the frequency domain among the scheduled RBs. Here, the interleaving bandwidth may always include all the scheduled RBs.

The first method and the second method assume that interleaving is performed. However, in the case in which the UE is configured with type-1 RA based scheduling, when the UE is the first type low-complexity UE, interleaving may not always be performed. The UE may not expect that the base station indicates interleaving. Therefore, it is assumed that a field (VRB-to-PRB mapping field) indicating interleaving is not included in scheduling DCI indicating Type-1 RA based scheduling. That is, a field indicating interleaving may not be included in the scheduling DCI or may be 0 bits.

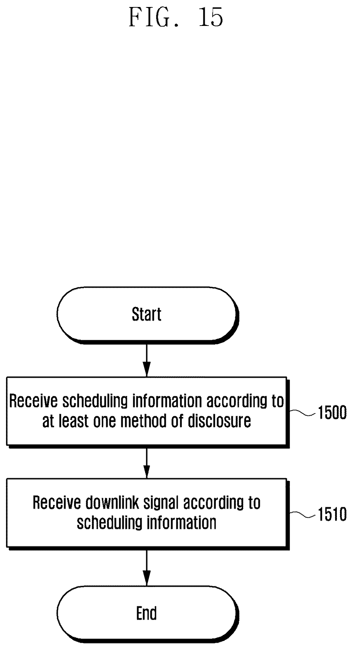

FIG. 15 is a diagram illustrating an example of operation of a UE that performs an embodiment of the disclosure.

According to FIG. 15, although not illustrated, the UE may report capability information to a base station. The capability information may include UE capability information, which is related to whether the UE supports an SBFD scheme, whether the UE is a low-complexity UE, the size of a bandwidth that the UE is capable of supporting, whether the UE is a first type low-complexity UE, or whether the UE is a second type low-complexity UE, or the like. The UE may receive scheduling information from the base station in operation 1500. The scheduling information may be downlink control information (DCI) including frequency domain resource allocation information, and the frequency domain resource allocation information may be information associated with a combination of at least one of the above-described methods in the disclosure. In addition, before the frequency band resource allocation information is received, the UE's bandwidth and/or use of at least one method of the disclosure may be determined in advance or may be configured via higher layer signaling. The UE may receive the scheduling information and may identify a frequency band (or one or more RBs) for signal reception according to a combination of at least one of the described methods of the disclosure.

The UE may receive a downlink signal in the identified frequency band according to the scheduling information in operation 1510. The downlink signal may be downlink data or a physical downlink shared channel (PDSCH) signal. According to a combination of at least one of the described methods of the disclosure, the UE may modulate and decode the received signal.

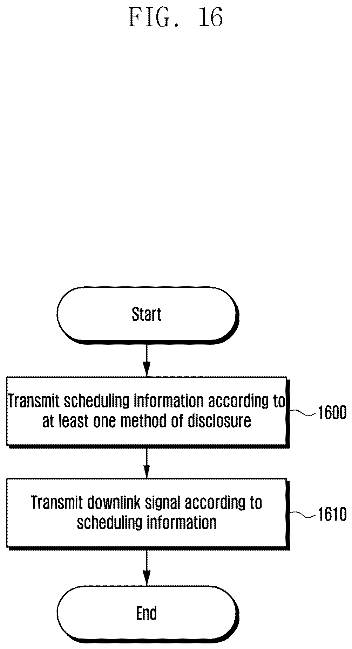

FIG. 16 is a diagram illustrating an example of operation of a base station that performs an embodiment of the disclosure.

According to FIG. 16, although not illustrated, the base station may receive a capability information report from a UE. The capability information may include UE capability information, which is related to whether the UE supports an SBFD scheme, whether the UE is a low-complexity UE, the size of a bandwidth that the UE is capable of supporting, whether the UE is a first type low-complexity UE, or whether the UE is a second type low-complexity UE, or the like. The base station may identify a frequency band (or one or more RBs) for downlink signal transmission, and may transmit scheduling information indicating the frequency band (or one or more RBs) to the UE in operation 1600. The scheduling information may be downlink control information (DCI) including frequency band resource allocation information, and the frequency band resource allocation information may be information based on a combination of at least one of the above-described methods in the disclosure. In addition, before the frequency band resource allocation information is received, the UE's bandwidth and/or use of at least one method of the disclosure may be determined in advance or the base station may be configured via higher layer signaling.

The base station may transmit a downlink signal in the identified frequency band in operation 1610. The downlink signal may be downlink data or a physical downlink shared channel (PDSCH) signal. In this instance, the base station may generate a signal to transmit according to a combination of at least one of the above described methods of the disclosure.

Although the disclosure has provided descriptions about downlink signal scheduling, the methods proposed in the disclosure may be applied to uplink signal scheduling via obvious modification.

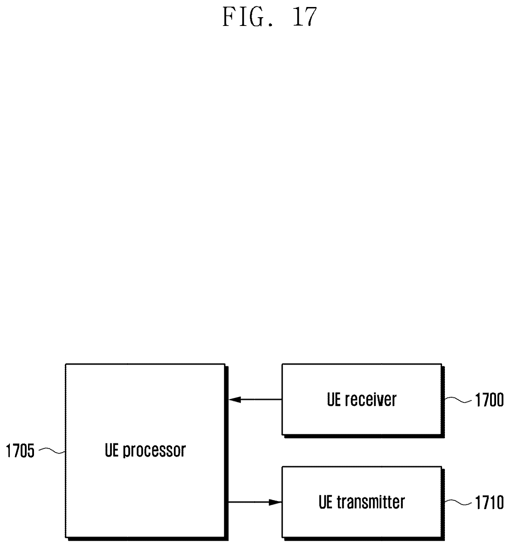

FIG. 17 illustrates a structure of a UE in a wireless communication system according to an embodiment of the disclosure.

Referring to FIG. 17, the UE may include a transceiver, which refers to a UE receiver 1700 and a UE transmitter 1710 as a whole, a memory (not illustrated), and a UE processor 1705 (or UE controller or processor). The UE transceiver 1700 and 1710, the memory, and the UE processor 1705 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. For example, the processor may control the components of the UE to receive scheduling information for low-complexity UEs, select a specific number of RBs, and receive signals in the RBs. The processor may include multiple processors, and the processor may perform operations of controlling the components of the UE by executing programs stored in the memory.

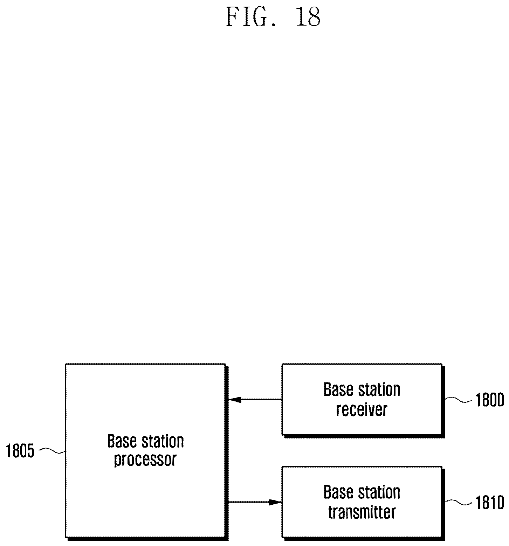

FIG. 18 illustrates a structure of a base station in a wireless communication system according to an embodiment of the disclosure.

Referring to FIG. 18, the base station may include a transceiver, which refers to a base station receiver 1800 and a base station transmitter 1810 as a whole, a memory (not illustrated), and a base station processor 1805 (or base station controller or processor). The base station transceiver 1800 and 1810, the memory, and the base station processor 1805 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. For example, the processor may control the components of the base station to configure DCI including resource allocation information for low-complexity UEs and transmit the DCI. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

   receiving configuration information associated with a bandwidth part (BWP) from a base station, the BWP comprising a plurality of resource blocks (RBs);
   receiving, from the base station, scheduling information indicating a first number of RBs among the plurality of RBs;
   identifying a maximum of a second number of RBs scheduled based on the scheduling information; and
   receiving a downlink signal in a maximum of the second number of RBs from the base station.

2. The method of claim 1, wherein the second number of RBs are identified based on a predetermined field or a modulation and coding scheme (MCS) field of downlink control information including the scheduling information, or based on the scheduling information.

3. The method of claim 1, wherein, in case that the first number is less than the second number, as many RBs as a value obtained by subtracting the first number from the second number, adjacent to the first number of RBs, are identified.

4. The method of claim 1, wherein, in case that the first number is greater than the second number, the second number of RBs are identified as RBs that are adjacent in a frequency domain among the first number of scheduled RBs.

5. A method performed by a base station in a communication system, the method comprising:

   transmitting, to a terminal, configuration information associated with a bandwidth part (BWP), the BWP comprising a plurality of resource blocks (RBs);
   transmitting scheduling information indicating a first number of RBs among the plurality of RBs to the terminal, based on a maximum of a second number of RBs to be scheduled; and
   transmitting, to the terminal, a downlink signal in a maximum of the second number of RBs.

6. The method of claim 5, wherein scheduling of the second number of RBs is indicated based on a predetermined field or a modulation and coding scheme (MCS) field of downlink control information including the scheduling information, or based on the scheduling information.

7. The method of claim 5, wherein, in case that the first number is less than the second number, as many RBs as a value obtained by subtracting the first number from the second number, adjacent to the first number of RBs, are further scheduled.

8. The method of claim 1, wherein, in case that the first number is greater than the second number, the second number of RBs that are adjacent in a frequency domain among the first number of scheduled RBs are scheduled.

9. A terminal in a communication system, the terminal comprising:

   a transceiver; and
   a controller configured to,
   receive configuration information associated with a bandwidth part (BWP) from a base station, the BWP comprising a plurality of resource blocks (RBs),
   receive, from the base station, scheduling information indicating a first number of RBs among the plurality of RBs,
   identify a maximum of a second number of RBs scheduled based on the scheduling information, and
   receive, from the base station, a downlink signal in a maximum of the second number of RBs.

10. The terminal of claim 9, wherein the second number of RBs are identified based on a predetermined field or a modulation and coding scheme (MCS) field of downlink control information including the scheduling information, or based on the scheduling information.

11. The terminal of claim 9, wherein, in case that the first number is less than the second number, as many RBs as a value obtained by subtracting the first number from the second number, adjacent to the first number of RBs, are identified.

12. The terminal of claim 9, wherein, in case that the first number is greater than the second number, the second number of RBs are identified as RBs that are adjacent in a frequency domain from among the first number of scheduled RBs.

13. A base station in a communication system, the base station comprising:

a transceiver; and
a controller configured to,
transmit configuration information associated with a bandwidth part (BWP) to a terminal, the BWP comprising a plurality of resource blocks (RBs);
transmit scheduling information indicating a first number of RBs among the plurality of RBs to the terminal, based on a maximum of a second number of RBs to be scheduled; and
transmit, to the terminal, a downlink signal in a maximum of the second number of RBs.

14. The base station of claim 13, wherein scheduling of the second number of RBs is indicated based on a predetermined field or a modulation and coding scheme (MCS) field of downlink control information including the scheduling information, or based on the scheduling information.

15. The base station of claim 13, wherein, in case that the first number is less than the second number, as many RBs as a value obtained by subtracting the first number from the second number, adjacent to the first number of RBs, are further scheduled.

FIG. 1

One subframe (110)

$N_{symb}^{subframe,\mu}$ OFDM symbols

1 OFDM symbols (102)

1 subcarrier (103)

$K=N_{RB,x}^{max,\mu} N_{sc}^{RB}-1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu}-1$

$K=0$

## FIG. 2

1 Frame (200)

1 Subframe (201)

μ=0 (204) — Slot (202): 0, 1, 2, 3, 4, 5, 6, 7, 8, 9

μ=1 (205) — Slot (203): 0, 1, 2, 3, 4, 5, 6, 7, 8, 9, 10, 11, 12, 13, 14, 15, 16, 17, 18, 19

FIG. 3

BWP#1 (301)

BWP#2 (302)

Frequency

UE bandwidth (300)

FIG. 4

# FIG. 5

1 SYMBOL
(501)

1 PRB
(502)

DMRS
(505)

CCE
(504)

REG
(503)

# FIG. 6

EP 4 651 598 A1

RA type 0 [600]

| Bitmap |
| --- |

615

RA type 1 [605]

| Starting VRB | Length |
| --- | --- |

620　　625

Both RA type 0 & 1 [610]

| 1 bit for RA type indication | Max{payload for RA type 0, payload for RA type 1} |
| --- | --- |

630　　635

FIG. 7

S
(700)

L (705)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (710)$$

# FIG. 8

$\mu_{\text{PDCCH}} = 1$

PDCCH | Slot n | Slot n + 1 | . . . | t

(800)

$\mu_{\text{PDSCH}} = 1$

. . . | PDSCH | t

Slot n + $K_0$

$\mu_{\text{PDCCH}} = 1$

PDCCH | Slot n | Slot n + 1 | . . . | t

(805)

$\mu_{\text{PDSCH}} = 2$

. . . | PDSCH | t

$$\text{Slot} \left\lfloor n \cdot \frac{2^{\mu_{\text{PDSCH}}}}{2^{\mu_{\text{PDCCH}}}} \right\rfloor$$

$$\text{Slot} \left\lfloor n \cdot \frac{2^{\mu_{\text{PDSCH}}}}{2^{\mu_{\text{PDCCH}}}} \right\rfloor + K_0$$

EP 4 651 598 A1

# FIG. 9

(a) TDD only configuration

(b) SBFD configuration 1

(c) SBFD configuration 2

(d) SBFD configuration 3

EP 4 651 598 A1

# FIG. 10

(a) Legacy UE (1000)

(b) First type low-complexity UE (1030)

(c) Second type low-complexity UE (1060)

FIG. 11

bitmap

| RGB0 | RGB1 | RGB2 | RGB3 | RGB4 | RGB5 | RGB6 | RGB7 | RGB8 | RGB9 | RGB10 | RGB11 | RGB12 | RGB 13 |
|---|---|---|---|---|---|---|---|---|---|---|---|---|---|
| 0 | 0 | 0 | 0 | 1 | 1 | 1 | 0 | 0 | 0 | 0 | 0 | 0 | 0 |

8 RBs

2 RBs

1100

1110

RB

# FIG. 12

EP 4 651 598 A1

# FIG. 13

BWP

Starting RGB index

| | | | | | | | | | | 0 | 1 | 2 | 3 | 4 | 5 | 6 | 7 | 8 | 9 | 10 | · · · | 23 | 24 | 25 | | | | | | | | | | | | |

(a) (1300)

Starting RGB index

| RGB0 | RGB1 | RGB2 | RGB3 | RGB4 | RGB5 | RGB6 | RGB7 | RGB8 | RGB9 | RGB10 | RGB11 | RGB12 | RGB 13 |

⟵ 8 RBs ⟶    ⟵ 2 RBs ⟶

(b) (1310)

EP 4 651 598 A1

# FIG. 14

Before Interleaving (1400)

After Interleaving (1410)

EP 4 651 598 A1

FIG. 15

```
            ┌─────────────┐
            │    Start     │
            └──────┬───────┘
                   │
                   ▼
   ┌──────────────────────────────────┐
   │ Receive scheduling information    │ ~1500
   │ according to at least one method  │
   │ of disclosure                     │
   └──────────────┬───────────────────┘
                  │
                  ▼
   ┌──────────────────────────────────┐
   │ Receive downlink signal according │ ~1510
   │ to scheduling information          │
   └──────────────┬───────────────────┘
                  │
                  ▼
            ┌─────────────┐
            │     End      │
            └─────────────┘
```

FIG. 16

```
        ╭──────────────────╮
        │      Start        │
        ╰──────────────────╯
                 │
                 ▼
   ┌──────────────────────────────────┐
   │Transmit scheduling information according to│ ～1600
   │   at least one method of disclosure │
   └──────────────────────────────────┘
                 │
                 ▼
   ┌──────────────────────────────────┐
   │ Transmit downlink signal according to │ ～1610
   │        scheduling information       │
   └──────────────────────────────────┘
                 │
                 ▼
        ╭──────────────────╮
        │       End         │
        ╰──────────────────╯
```

FIG. 17

FIG. 18

## INTERNATIONAL SEARCH REPORT

| International application No. |
|---|
| **PCT/KR2024/001666** |

| A. | CLASSIFICATION OF SUBJECT MATTER |
|---|---|

**H04W 72/12**(2009.01)i; **H04W 72/04**(2009.01)i; **H04W 72/0457**(2023.01)i; **H04W 72/232**(2023.01)i; **H04L 5/14**(2006.01)i

According to International Patent Classification (IPC) or to both national classification and IPC

| B. | FIELDS SEARCHED |
|---|---|

Minimum documentation searched (classification system followed by classification symbols)

H04W 72/12(2009.01); H04L 1/00(2006.01); H04L 5/00(2006.01); H04W 28/20(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: reduced capability UE(RedCap UE), base station, BWP, configuration, RB(resource block), number, count, downlink

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2104362 B1 (TELEFONAKTIEBOLAGET LM ERICSSON(PUBL)) 24 April 2020 (2020-04-24)<br>See paragraphs [0010] and [0143]; and figure 15. | 1-2,5-6,9-10,13-14 |
| A | | 3-4,7-8,11-12,15 |
| A | KR 10-2018-0134305 A (LG ELECTRONICS INC.) 18 December 2018 (2018-12-18)<br>See paragraphs [0146]-[0218]; and figures 9-13. | 1-15 |
| A | KR 10-2020-0099581 A (WILUS INSTITUTE OF STANDARDS AND TECHNOLOGY INC.) 24 August 2020 (2020-08-24)<br>See paragraphs [0261]-[0296]; and figure 16. | 1-15 |
| A | KR 10-2022-0126802 A (SAMSUNG ELECTRONICS CO., LTD.) 16 September 2022 (2022-09-16)<br>See paragraphs [0189]-[0202]; and figures 31-35. | 1-15 |
| A | US 2020-0228287 A1 (HUAWEI TECHNOLOGIES CO., LTD.) 16 July 2020 (2020-07-16)<br>See paragraphs [0172]-[0304]; and figures 8-19. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2024** | **30 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 651 598 A1**

| Patent document cited in search report | | | Publication date (day/month/year) | Patent family member(s) | | | Publication date (day/month/year) |
|---|---|---|---|---|---|---|---|
| KR | 10-2104362 | B1 | 24 April 2020 | CN | 111919408 | A | 10 November 2020 |
| | | | | CN | 111919408 | B | 10 May 2022 |
| | | | | CN | 115134057 | A | 30 September 2022 |
| | | | | EP | 3602951 | A1 | 05 February 2020 |
| | | | | EP | 3602951 | B1 | 05 May 2021 |
| | | | | EP | 3840274 | A1 | 23 June 2021 |
| | | | | EP | 3840274 | B1 | 06 July 2022 |
| | | | | EP | 4120612 | A1 | 18 January 2023 |
| | | | | JP | 2021-508958 | A | 11 March 2021 |
| | | | | JP | 2022-003773 | A | 11 January 2022 |
| | | | | JP | 6929973 | B2 | 01 September 2021 |
| | | | | KR | 10-2019-0138895 | A | 16 December 2019 |
| | | | | US | 10455582 | B1 | 22 October 2019 |
| | | | | US | 11006419 | B2 | 11 May 2021 |
| | | | | US | 11895633 | B2 | 06 February 2024 |
| | | | | US | 2019-0306861 | A1 | 03 October 2019 |
| | | | | US | 2020-0008202 | A1 | 02 January 2020 |
| | | | | US | 2021-0212065 | A1 | 08 July 2021 |
| | | | | WO | 2019-190374 | A1 | 03 October 2019 |
| KR | 10-2018-0134305 | A | 18 December 2018 | CN | 110945817 | A | 31 March 2020 |
| | | | | CN | 110945817 | B | 21 October 2022 |
| | | | | EP | 3633902 | A1 | 08 April 2020 |
| | | | | EP | 3633902 | A4 | 20 May 2020 |
| | | | | EP | 3633902 | B1 | 15 December 2021 |
| | | | | EP | 3926881 | A1 | 22 December 2021 |
| | | | | EP | 3926881 | B1 | 12 April 2023 |
| | | | | JP | 2020-522964 | A | 30 July 2020 |
| | | | | JP | 7155166 | B2 | 18 October 2022 |
| | | | | KR | 10-1950995 | B1 | 22 February 2019 |
| | | | | US | 11477791 | B2 | 18 October 2022 |
| | | | | US | 2020-0120680 | A1 | 16 April 2020 |
| KR | 10-2020-0099581 | A | 24 August 2020 | CN | 111567117 | A | 21 August 2020 |
| | | | | CN | 116489793 | A | 25 July 2023 |
| | | | | CN | 116489794 | A | 25 July 2023 |
| | | | | CN | 116489795 | A | 25 July 2023 |
| | | | | EP | 3740002 | A1 | 18 November 2020 |
| | | | | EP | 3740002 | A4 | 10 November 2021 |
| | | | | EP | 3740002 | B1 | 14 June 2023 |
| | | | | EP | 4050954 | A1 | 31 August 2022 |
| | | | | EP | 4050955 | A1 | 31 August 2022 |
| | | | | EP | 4280779 | A1 | 22 November 2023 |
| | | | | JP | 2021-510487 | A | 22 April 2021 |
| | | | | JP | 2023-051905 | A | 11 April 2023 |
| | | | | JP | 2023-051906 | A | 11 April 2023 |
| | | | | JP | 2023-130334 | A | 20 September 2023 |
| | | | | JP | 7235340 | B2 | 08 March 2023 |
| | | | | JP | 7427279 | B2 | 05 February 2024 |
| | | | | JP | 7446641 | B2 | 11 March 2024 |
| | | | | KR | 10-2022-0088954 | A | 28 June 2022 |
| | | | | KR | 10-2022-0089716 | A | 28 June 2022 |

Form PCT/ISA/210 (patent family annex) (July 2022)

## INTERNATIONAL SEARCH REPORT
### Information on patent family members

| International application No. |
| --- |
| **PCT/KR2024/001666** |

| Patent document cited in search report | | | Publication date (day/month/year) | Patent family member(s) | | | Publication date (day/month/year) |
| --- | --- | --- | --- | --- | --- | --- | --- |
| | | | | KR | 10-2023-0048563 | A | 11 April 2023 |
| | | | | KR | 10-2411788 | B1 | 23 June 2022 |
| | | | | US | 11497033 | B2 | 08 November 2022 |
| | | | | US | 11632768 | B2 | 18 April 2023 |
| | | | | US | 11737078 | B2 | 22 August 2023 |
| | | | | US | 2021-0058940 | A1 | 25 February 2021 |
| | | | | US | 2022-0248413 | A1 | 04 August 2022 |
| | | | | US | 2022-0287046 | A1 | 08 September 2022 |
| | | | | US | 2023-0354294 | A1 | 02 November 2023 |
| | | | | WO | 2019-139444 | A1 | 18 July 2019 |
| KR | 10-2022-0126802 | A | 16 September 2022 | CN | 109565861 | A | 02 April 2019 |
| | | | | CN | 109565861 | B | 23 March 2021 |
| | | | | CN | 113115462 | A | 13 July 2021 |
| | | | | CN | 113115463 | A | 13 July 2021 |
| | | | | EP | 3482596 | A1 | 15 May 2019 |
| | | | | EP | 3482596 | A4 | 24 July 2019 |
| | | | | EP | 3482596 | B1 | 06 October 2021 |
| | | | | EP | 3934357 | A1 | 05 January 2022 |
| | | | | EP | 4346109 | A2 | 03 April 2024 |
| | | | | KR | 10-2019-0029648 | A | 20 March 2019 |
| | | | | KR | 10-2023-0006030 | A | 10 January 2023 |
| | | | | KR | 10-2441215 | B1 | 07 September 2022 |
| | | | | KR | 10-2481800 | B1 | 27 December 2022 |
| | | | | KR | 10-2618292 | B1 | 28 December 2023 |
| | | | | US | 10602516 | B2 | 24 March 2020 |
| | | | | US | 11419115 | B2 | 16 August 2022 |
| | | | | US | 2018-0049203 | A1 | 15 February 2018 |
| | | | | US | 2020-0229190 | A1 | 16 July 2020 |
| | | | | US | 2022-0394686 | A1 | 08 December 2022 |
| | | | | WO | 2018-030864 | A1 | 15 February 2018 |
| US | 2020-0228287 | A1 | 16 July 2020 | CN | 109586866 | A | 05 April 2019 |
| | | | | CN | 111147218 | A | 12 May 2020 |
| | | | | CN | 111147218 | B | 05 January 2021 |
| | | | | EP | 3687093 | A1 | 29 July 2020 |
| | | | | EP | 3687093 | A4 | 25 November 2020 |
| | | | | EP | 3687093 | B1 | 06 July 2022 |
| | | | | EP | 4117215 | A1 | 11 January 2023 |
| | | | | JP | 2020-535761 | A | 03 December 2020 |
| | | | | JP | 7248661 | B2 | 29 March 2023 |
| | | | | KR | 10-2020-0055107 | A | 20 May 2020 |
| | | | | KR | 10-2430393 | B1 | 05 August 2022 |
| | | | | WO | 2019-062837 | A1 | 04 April 2019 |

Form PCT/ISA/210 (patent family annex) (July 2022)